Europäisches Patentamt

European Patent Office

Office européen des brevets

(19)

(11) Veröffentlichungsnummer: **0 157 304**
**B1**

(12) **EUROPÄISCHE PATENTSCHRIFT**

(45) Veröffentlichungstag der Patentschrift: 06.06.90

(21) Anmeldenummer: 85103333.2

(22) Anmeldetag: 21.03.85

(51) Int. Cl.⁵: **F 01 D 21/00, G 02 B 23/26, B 25 J 11/00**

(54) **Manipulatorsystem zur Bewegungssteuerung, Versorgung und Signalabfrage eines Spezial-Endoskops, insbesondere zur optischen Rissprüfung.**

(30) Priorität: 03.04.84 DE 3412479
18.02.85 DE 3505564

(43) Veröffentlichungstag der Anmeldung:
09.10.85 Patentblatt 85/41

(45) Bekanntmachung des Hinweises auf die
Patenterteilung:
06.06.90 Patentblatt 90/23

(84) Benannte Vertragsstaaten:
CH DE FR GB LI

(56) Entgegenhaltungen:
GB-A-2 108 681
US-A-3 917 432
US-A-4 056 972
US-A-4 255 762

PATENT ABSTRACTS OF JAPAN, Band 5, Nr. 9
(p-45)681r, 21. Januar 1981; & JP-A-55 138 642
(MITSUBISHI JUKOGYO K.K.) 29-10-1980

(73) Patentinhaber: Siemens Aktiengesellschaft
Wittelsbacherplatz 2
D-8000 München 2 (DE)

(72) Erfinder: Elfert, Bernd, Ing. grad.
Saarner Strasse 203
D-4330 Mülheim/Ruhr (DE)
Erfinder: Kohlert, Erich
Tetzelweg 38
D-8520 Erlangen (DE)

Courier Press, Leamington Spa, England.

**Beschreibung**

Die Erfindung bezieht sich auf ein Manipulatorsystem zur Bewegungssteuerung, Versorgung und Signalabfrage eines Spezial-Endoskops, gemäß Oberbegriff des Anspruches 1.

Ein bevorzugter Anwendungsfall eines solchen Manipulatorsystems ist die Rißprüfung im Bereich der axialen Verdrehsicherungen von Niederdruckturbinenläufern der Scheibenbauart. Hierbei werden in enge Spalte, die nur eine Spaltweise von 2 mm oder sogar noch darunter aufweisen, schwertförmige Spezial-Endoskope eingeführt, wobei die zu inspizierenden Oberflächenstrukturen zweckmäßigerweise vorbehandelt werden, insbesondere mit Penetriermittel (einem flüssigen, fluoreszierenden Substrat, welches bei UV-Licht-Einstrahlung sichtbares Licht reflektiert), mit Rißprüfpulver u. dgl.

Die Einführung der schwertförmigen Sone des Spezial-Endoskops gestaltet sich wegen der engen Spaltweiten relativ schwierig; es muß dabei zusätzlich noch ermöglicht sein, daß die schwertförmige Sonde innerhalb des Spaltes tangential bzw. in y-Richtung verschoben werden kann, damit die Sonde des Endoskops in die optimale Prüfposition verfahren werden kann. Dabei hat es sich als vorteilhaft erwiesen, am Ende der schwertförmigen Sonde sowohl das optische System eines Übersichts-Sondenteils als auch dasjenige des eigentlichen Makro-Sondenteils anzubringen. Mit dem Makro-Sondenteil wird dann die eigentliche optische Rißprüfung vorgenommen. Der besondere Aufbau des Spezial-Endoskops ist nicht Gegenstand der vorliegenden Anmeldung; dieses ist in der deutschen Anmeldung P 34 38 971.7 desselben Anmelders, angemeldet am 24.10.1984 unter Inanspruchnahme der inneren Priorität vom 03.04.1984 aus P 34 12 434.9, näher erläutert.

Es liegt die Aufgabe vor, ein gattungsgemäßes Manipulatorsystem zu schaffen, welches im Sinne der aufgezeigten Problemstellung ermöglicht, schwert- bzw. messerförmige Sonden von Endoskopen in enge Spalten, insbesondere in solchen zwischen den axial einander benachbarten Radscheiben von Scheibenläufern bei Dampfturbinen, präzise und ohne Beschädigungsgefahr einzuführen, in der eingeführten Position zu manipulieren in Richtung auf die optimalen Prüfpositionen und die schwert- bzw. messerförmige Sonde auch ohne Beschädigung aus ihrer Prüfposition herauszuziehen.

Erfindungsgemäß wird die gestellte Aufgabe bei einem Manipulatorsystem der eingangs definierten Art durch die im Kennzeichen des Anspruchs 1 angegebenen Merkmale in der Hauptsache gelöst.

Vorteilhafte Weiterbildungen sind in den Unteransprüchen 2 bis 13 angegeben.

Die mit der Erfindung erzielbaren Vorteile sind vor allem darin zu sehen, daß die Positionierung der schwertförmigen Sonde im engen Inspektionsspalt ohne Beschädigung oder ohne Beschädigungsgefahr erfolgen kann, weil ein hartes Anlaufen des Sondenkopfes bzw. der Führungsschwerter gegen die den Einführ- bzw. Inspektionsspalt-Bereich begrenzenden Wandteile nicht erfolgen kann. Dies ist deshalb von besonderer Bedeutung, weil im bevorzugten Anwendungsfall der optischen Rißprüfung bei Turbinen-Scheibenläufern ein axialer Versatz zwischen der Festklemmebene des Manipulators und der Inspektionsebene vorliegt.

Im folgenden wird anhand der ein Ausführungsbeispiel darstellenden Zeichnung die Erfindung noch näher erläutert. Darin zeigt, teils in schematischer Darstellung:

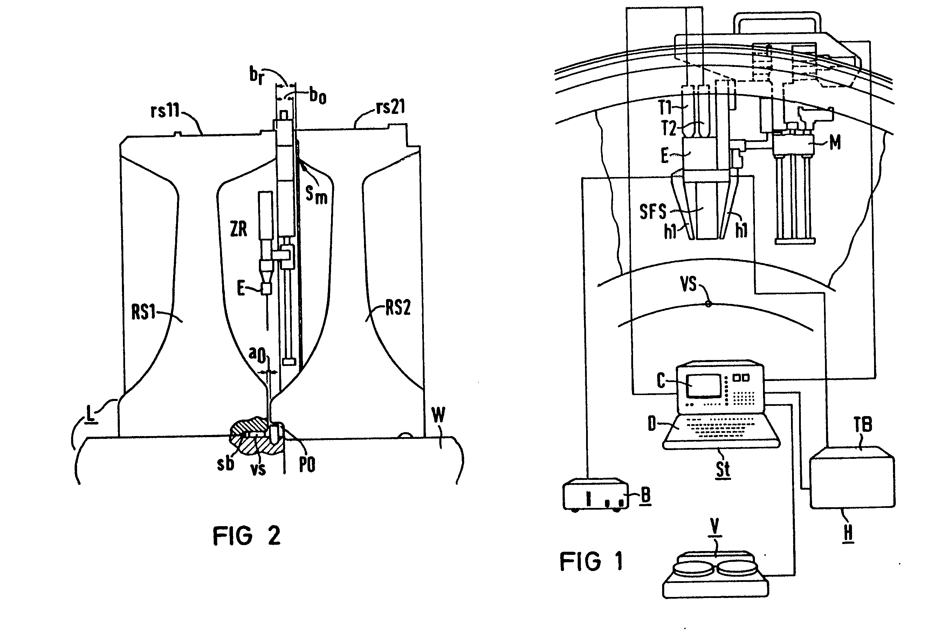

Fig. 1 das Manipulatorsystem nach der Erfindung als Bestandteil einer endoskopischen Rißprüfeinrichtung, verspannt zwischen den axial einander benachbarten Radköpfen zweier Radscheiben eines Dampfturbinenscheibenläufers, wobei die schwertförmige Sonde des Spezial-Endoskops zum Einfahren in den Untersuchungsspalt positioniert ist, in welch letzterem eine axiale Verdrehsicherung in bezug auf die angrenzenden Materialzonen der Radscheibennabe auf Risse zu inspizieren ist. Das Manipulatorsystem wird komplettiert durch eine Steuereinheit, einen UV-Lichtprojektor, einen Video-Rekorder und eine Hilfseinrichtung;

Fig. 2 die beiden Radscheiben, zwischen deren Köpfen der Manipulator positioniert ist, in einem Axialschnitt, wobei lediglich die Partie oberhalb der Turbinenwelle gezeigt ist;

Fig. 3 unter Aufteilung in die drei Figurenteile 3A, 3B, 3C den Manipulator in Draufsicht mit seinen drei Antriebseinrichtungen, welche ein Verfahren der schwertförmigen Sonde bzw. ihrer Führungsschwerter in Richtung y, z1 und z11 gestatten, und ferner mit einer Doppelknick-Antriebseinrichtung, welche es gestattet, die schwertförmige Sonde und ihre Führungsschwerter in Richtung x ein begrenztes Stück zu bewegen;

Fig. 4 das Doppelknick-Gelenk, wobei die beiden äußeren Gelenkteile immer parallel zueinander bleiben und ihr definiertes Verschwenken durch ein Spezialzahnrad im mittleren Bereich des mittleren Gelenkteils erfolgt;

Fig. 5 den Schnitt durch die Gelenkanordnung nach Fig. 4;

Fig. 6 den Schnitt VI—VI aus Fig. 3;

Fig. 7 die Seitenansicht des ersten Tragarms des Manipulators mit einer Trennstelle;

Fig. 8 perspektivisch und schematisch die Haupt-Fahrrichtungen ±x, ±y und ±z des Manipulator-Koordinatenfahrwerks;

Fig. 9 schematisch in Seitenansicht auf die schwertförmige Sonde, in Richtung −y die Funktion des elastischen Zwischengliedes bei vier unterschiedlichen Feinpositionierungen der Sonde mit verschiedenen Werten ±$\Delta$x (lineare) und $\alpha_2$ (Winkel-Feinpositionierung);

Fig. 10 schematisch in einer Draufsicht auf die Sonde in Richtung +z die Funktion des Doppelknick-Gelenkes anhand von drei unterschiedlichen Positionen x=0; x=+$x_1$ und x=−$x_1$ und

Fig. 11 die vom Schwenkwinkel $\beta$, $\beta_1$, $\beta_2$ usw.

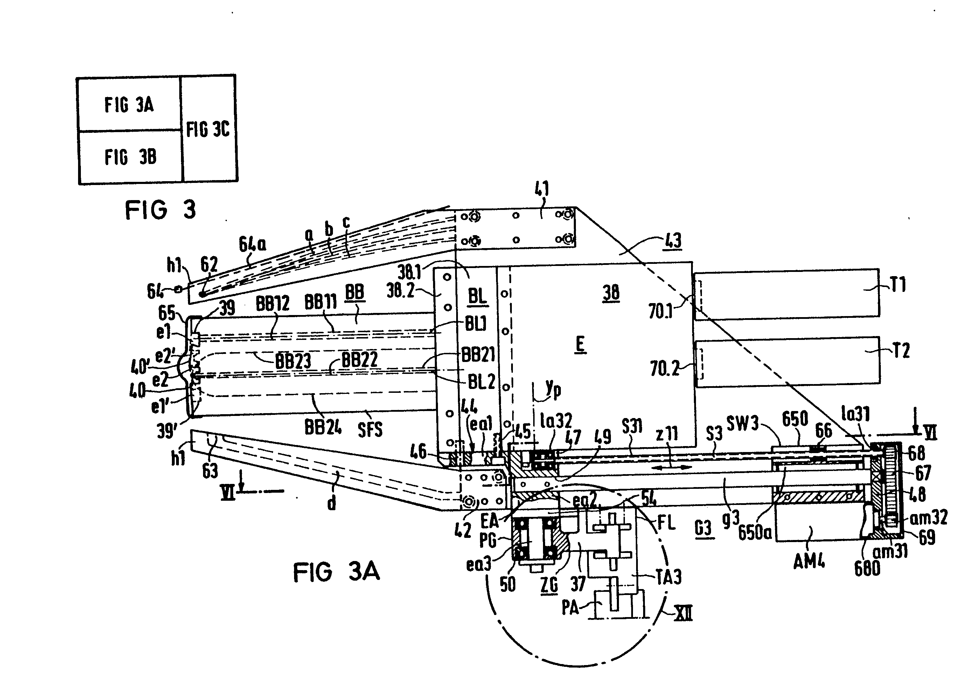

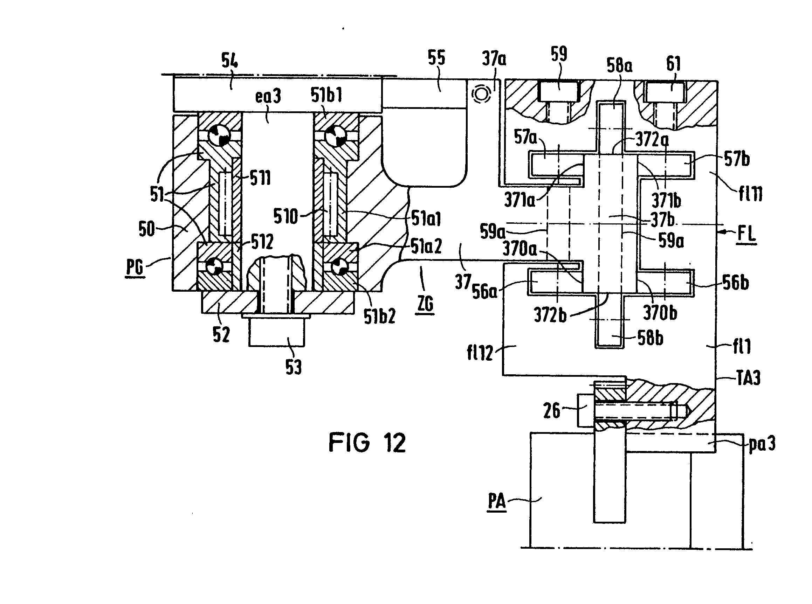

der Antriebslasche abhängige Verstellung der Sonde in linearer Richtung um $\pm x_1$, $\pm x_2$ usw. und Fig. 12 das Detail XII aus Fig. 3A.

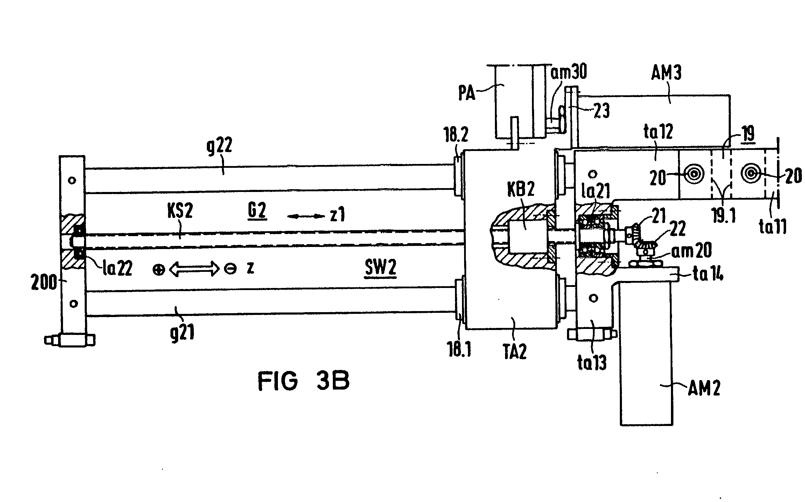

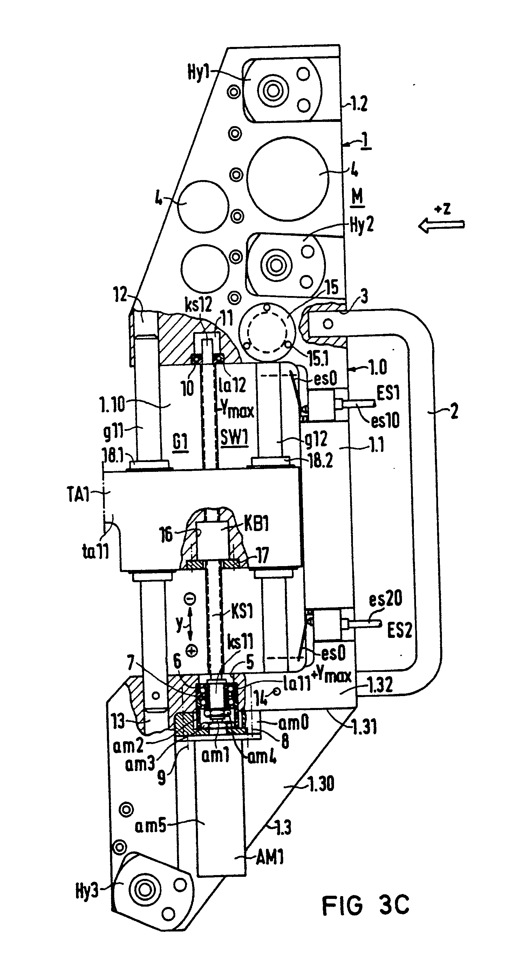

Im folgenden wird zunächst das Manipulatorsystem an Hand der Fig. 1 bis 3 im Prinzip erläutert, und daran anschließend erfolgt die Detail-Erläuterung anhand der Fig. 3 bis 12.

*Optische Rißkontrolle an aufgeschumpften Niederdruck-Radscheiben mit Hilfe des Manipulatorsystems nach der Erfindung*

Die Baurt von Niederdruckturbinenläufern *der* Scheibenbauart ermöglicht eine optische Kontrolle der Nabenstirnflächen. Der axiale Abstand der benachbarten Radnaben von 2 mm läßt den Einsatz eines speziell für diese Untersuchung entwickelten Endoskops zu. Damit lassen sich durch Inspektion der Umgebung von Verdrehsicherungen eventuell entstehende Risse erkennen, die die Nabenstirnfläche erreicht haben.

Eine solche Untersuchung stellt *eine* Ergänzung zur Ultraschall-Prüfung dar. Sie ist mit *relativ* geringem apparativen Aufwand möglich und läßt eine direkte Aussage über Lage, Form und radiale Erstreckung eines erkannten Fehlers zu.

Die endoskopische Rißprüfeinrichtung besteht aus folgenden Bauteilen (vgl. Fig. 1, 2 und 3):

1. Schwertförmiges Spezial-Endoskop E mit Übersichts- und Makrooptik e1, e2 sowie:
 —UV-Beleuchtungseinrichtung B;
 —2 TV-Kameras T1, T2 mit Steuergerät St;
 —1 Video-Recoder V;
2. Manipulator M zur
 —Aufnahme und Positionierung des schwertförmigen Spezial-Endoskops E und seiner Führungsschwerter. Letztere sind mit Kanälen a, b, c, d und Düsen versehen und dienen außer dem Schutz des Spezial-Endoskops der
 —Reinigung und Penetrierung (Aufbringen eines Rißprüfmittels), der Trocknung der zu untersuchenden Oberflächenpartie der Radscheibe sowie der Absaugung der überschüssigen Reinigungs- und Penetrierflüssigkeit von den zu inspizierenden Flächen;
3. Hilfseinrichtung H mit entsprechenden Fluidleitungen, Fluidspeichern und Pumpen zur Versorgung der Führungsschwerter
 —mit Flüssigkeit zur Reinigung der zu inspizierenden Oberflächen insbesondere mit Kondensat;
 —mit Penetrierflüssigkeit (fluoreszierendem Prüfmittel) und mit Rißprüfpulver sowie zur Entsorgung der Inspektionsstelle von überschüssiger Reinigungs- und Penetrierflüssigkeit (Absaugung aus dem Inspektionsspalt) und zur Trocknung der Inspektionsstelle mittels Heißluftgebläses und Heißluftleitung, die an eine Heißluftdüse mindestens eines Führungsschwertes angeschlossen ist.

Zu 1:

Das Spezial-Endoskop E ist in seinem licht- und bildleitenden Teil SFS aus zwei Halbschalen zusammengesetzt, die die optischen Systeme aufnehmen und die eine Gesamtdicke von lediglich 1,8 mm aufweisen (nicht näher dargestellt). Seine herausragende Eigenschaft ist volle UV-Tauglichkeit bei diesen geringen Abmessungen.

Zur Bildübertragung und Dokumentation wird ein Videosystem eingesetzt, das aus Kameraköpfen T1, T2, einem externen Steuergerät St mit Monitor C und Datenschreibeinrichtung D und einem Videorecorder V besteht. Auf dem Monitor C werden die aktuellen Positionsdaten des Endoskops E eingeblendet, so daß eine direkte Vermessung von festgestellten Fehlern möglich ist.

Zu 2:

Der Manipulator M dient der Aufnahme und Positionierung des Spezial-Endoskops E. Er wird mittels Hydraulikzylindern Hy zwischen die Stirnfläche der benachbarten Radköpfe rs1, rs2 gespannt. Seine Konstruktion trägt der unterschiedlichen axialen Abständen der Radköpfe Rechnung. Der kleinste axiale Abstand, der zwischen den Radköpfen rs11, rs21 der Radscheiben RS1 und RS2 zum Festspannen des Manipulators verbleibt, beträgt lediglich etwa 50 mm. Durch Anbau von Ausgleichsstücken AS ist der Manipulator M für sämtliche vorkommenden Radscheibenpaarungen einsetzbar.

Das Endoskop E wird am Manipulator M im Bereich der sogenannten Führungsschwerter h1 befestigt, die zu beiden Seiten des Endoskops dieses beim Eintauchen in den Spalt führen und die zusätzlich mit den schon genannten Versorgungskanälen a, b, c, d ausgerüstet sind. Über diese können Reinigungs- und Prüfmittel in den Spalt eingebracht und abgesaugt und die zu prüfenden Oberflächen PO mit Warmluft zum Trocknen beaufschlagt werden. Für diese der Prüfung vorausgehenden Arbeitsgänge kann das Schwertpaar h1, h1 unabhängig vom Endoskop E eingefahren werden. Eine Verriegelung verhindert zum Shutz der Optik e1, e2 vor Verschmutzung das Spülen und Penetrieren bei eingetauchtem Endoskop E.

Zu 3:

Die Hilfseinrichtung H zur Reinigung, Penetrierung und Absaugung sowie zur Trocknungsluftversorgung ist in einem Transportbehälter TB als kompakte Einheit untergebracht. Ihre einzelnen Komponenten werden von dem zentralen Steuergerät St, in dem Video- und Manipulatorsteuerung untergebracht sind, angesteuert.

Fig. 2 zeigt im Ausschnitt einen axialen Verdrehsicherungsbolzen vs, der in eine axiale Sacklochbohrung sb eingetrieben ist. Letztere liegt zur Hälfte im Material des Wellenaußenumfanges und zur anderen Hälfte im Material des Scheibeninnenumfanges. Es sind z. B. fünf solcher axialen Verdrehsicherungsbolzen vs in gleichmäßig über den Wellenumfang verteilte Sacklochbohrungen eingetrieben. Dort, wo diese Sacklochbohrungen sb und die Verdrehsicherungsbolzen vs angeordnet sind, lieden die Verdrehsicherungszonen PO, welche an den Turbinenradscheiben RS1, RS2 uzw. mit dem beschriebenen Manipulatorsystem bei geöffneter Turbine am eingebauten Läufer L optisch inspiziert werden können. Die axialen Nabenabstände $a_0$ müssen lediglich 2 mm betragen.

Wie erwähnt, sind bei dem dargestellten Läufer je Radscheibe fünf Verdrehsicherungen vorhanden. In allen zehn Scheiben eines Läufers sind sie so angeordnet, daß die gesamte Inspektion bei nur einer Umdrehung der Welle in fünf Teilschritten ausgeführt werden kann.

Detailbeschreibung des Manipulatorsystems

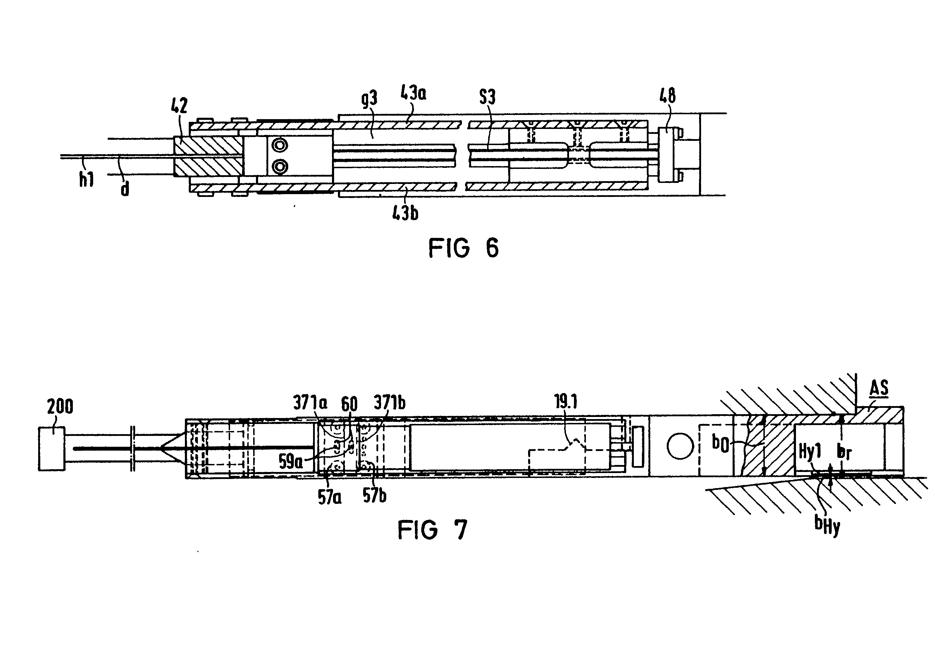

Der Manipulator M nach Fig. 3 bzw. Fig. 3A, 3B, 3C weist einen flachen Grundkörper 1 auf, dessen Breite $b_0$ (vgl. Fig. 2 und Fig. 7) im dargestellten Beispiel etwa 50 mm beträgt, so daß der Manipulator mit seinem Grundkörper 1 in den Montagespalt $s_m$ mit der engsten Spaltweite $b_r$ zwischen dei Radköpfe rs11, rs21 jeweils zweier einander benachbarter Radscheiben RS1, RS2 eines Scheibenläufers eingeschoben werden kann und sich in seiner Bereitschaftsstellung (Fig. 1 und 2) im Zwischenraum ZR zwischen den einander benachbarten Radscheiben RS1, RS2 befindet. Zum Einfügen des Manipulators durch und in den Montagespalt $s_m$ kann das Spezial-Endoskop E in Flucht gebracht werden mit dem Grundkörper 1 mittels eines speziellen x-Antriebes, auf den weiter unten noch eingegangen wird. In Fig. 1 und 2 ist eine Bereitschaftsposition des Manipulators M gezeigt, in welcher er zwischen den Radköpfen rs11, rs21 verspannt ist und mit seinem Spezial-Endoskop E einschließlich der Führungsschwerter h1 in eine solche x-Position verfahren wurde, daß die Endoskop-Sonde in den Axialspalt $a_0$ (Inspektionsspalt) eingefahren werden kann. Der Grundriß des Grundkörpers 1 ist bei Betrachtung in Richtung +x (Maschinenachsrichtung) etwa parallelogrammförmig; er bildet einen Führungsrahmen zur Halterung der Geradführung G1 und des Spindelantriebs für den ersten Tragarm TA1 des Manipulators M. Der noch näher zu erläuternde Spindel-Wandermutter-Trieb, der als Ganzes mit SW1 bezeichnet wird, gestattet ein Verfahren des ersten Tragmars TA1 in Richtung ±y, wobei willkürlich die Bewegungsrichtung aufwärts in Fig. 3 als ⊖-Richtung und die Abwärtsbewegung als ⊕-Richtung bezeichnet ist. Der Grundkörper 1 ist zur Ermöglichung der Fahrbewegung des y-Antriebs SW1 mit einer rechteckförmigen Aussparung 1.10 versehen, so daß ein Verbindungssteg 1.1 und die beiden Flankenteile 1.2 und 1.3 stehen bleiben. Am Verbindungssteg 1.1 ist an einer nach außen weisenden Schmalseite 1.0 der Traggriff 2 befestigt. Dargestellt ist ein Traggriff aus gebogenem Rundmaterial, welcher in entsprechende Bohrungen 3 des Grundkörpers 1 (von denen nur eine dargestellt ist) eingelassen und darin verstiftet ist. Die beiden in Richtung −y bzw. +y an den Verbindungssteg 1.1 angrenzenden Flankenteile 1.2 und 1.3 haben einen etwa trapez- bzw. dreieckförmigen Grundriß. Der Flankenteil 1.2 ist mit zwei in Richtung der x-Achse bzw. maschinenachsparallel oder in Richtung der Spaltweite wirkenden hydraulischen Spannzylindern Hy1, Hy2 versehen, der Flankenteil 1.3 mit einem solchen Spannzylinder Hy3. Als Spannkörper kämen z. B. auch Abdrückschrauben in Betracht; hydraulische Spannzylinder sind aber besonders vorteilhaft wegen ihrer hohen Spannkräfte und der Möglichkeit der Schnellverspannung. Hydraulikleitungen sind der Einfachheit halber nicht dargestellt. Beim Hydrauliksystem kann es sich um ein internes System mit Handpumpe oder um ein solches mit Anschluß der Hydraulikleitungen an einen externen Fluiddruckspeicher handeln. Die kreisförmigen Aussparungen 4 im Flankenteil 1.2 des Grundkörpers 1 dienen der Gewichtsersparnis, die an der Breitseite des Grundkörpers verschraubte Abstandsplatte AS (siehe rechter Teil der Fig. 7) dient, wie bereits erwähnt, zur Anpassung der Grundkörperbreite an unterschiedliche Abstände $b_r$ zwischen den Radköpfen rs11, rs21 (siehe Fig. 2 und Fig. 7), damit immer ein sicheres Verspannen des Grundkörpers mittels der einen Maximalhub von ca. 10 mm aufweisenden Spannzylinder ermöglicht ist, deren einer hervorschauender Spannkolbenkopf in Fig. 7 mit Hy1 bezeichnet ist, dessen Hub mit $b_{Hy}$.

Der Flankenteil 1.3 des Grundkörpers 1 weist eine etwa dreieckförmige Aussparung 1.30 zur Aufnahme und zur Montage eines Antriebsmotors AM1 auf, so daß eine in y-Richtung weisende Montagefläche 1.31 an der Wand 1.32 gebildet ist, an welcher der Antriebsmotor AM1 mit seinem Befestigungsflansch am0 festgespannt ist, und zwar derart, daß die Achse der Motorwelle am1 gleichachsig liegt zur Achse der ein Außengewinde aufweisenden Gewindespindel KS1, welche als Kugelumlaufspindel ausgeführt und an ihren beiden Enden in den Spindellagern la11 bzw. la12 drehbar gelagert ist. Der Befestigungsflansch am0 bildet einen Hohlraum, in welchem die Abstandsbüchse am2 und die beiden Befestigungsmuttern am3, am4 untergebracht sind. Innerhalb der Wellendurchführung 5 durch die Wand 1.32 sind auf einem Absatz 6 die beiden Rillenkugellager-Einsätze 7 des Spindellagers la11 angeordnet, wobei die Außenringe der Einsätze 7 durch die Abstandsbüchse am2 in Position gehalten werden und die Innenringe mit dem Lagerzapfen ks11 der Gewindespindel KS1 mittels der Mutter am4 verspannt sind. Eine Spannschraube des Befestigungsflansches am0 ist bei 8 eingezeichnet, eine Motorhaube am5 ist am Befestigungsflansch am0 mit einem Haubenflansch mittels der Schrauben 9 festgeschraubt. Die Motorwelle am1 ist mit der Gewindespindel KS1 z. B. mittels Steckkupplung innerhalb des hohlen Lagerzapfens ka11 gekuppelt.

An ihrem anderen Ende ist die Gewindespindel KS1 mit einem Lagerzapfen ks12 innerhalb des Spindellagers la12 ebenfalls kugelgelagert, siehe Kugellager-Einsatz 10, eingesetzt in eine Sacklochbohrung 11 des Flankenteils 1.2. Der Antriebsmotor AM1 ist insbesondere ein Gleichstrom- oder Mehrphasen-Schrittmotor; die elektrischen Zuleitungen sind bei diesem Antriebsmotor wie auch bei den übrigen Antriebsmotoren des Manipulators M der Einfachheit halber weggelassen.

Die Geradführung G1 für den ersten Tragarm TA1 besteht aus zwei achsparallel zueinander und zur Gewindespindel KS1, d. h. in Richtung y, orientierten und am Grundkörper 1 befestigten Führungsstangen g11 und g12. Die in Richtung +z gesehen untere Führungsstange g11 ist durch eine Bohrung 12 im Grundkörper 1 eingeschoben und mit ihrem Einschiebende in einer gegenüberliegenden Bohrung 13 des anderen Endteils 1.3 verstiftet. Die in Richtung +z gesehen obere Führungsstange g12 ist ebenfalls innerhalb einer nicht näher ersichtlichen Bohrung des Flankenteils 1.3 bei 14 verstiftet. Damit sie in die entsprechende Bohrung eingeschoben werden kann, ist bei 15 ein Gegenlager vorgesehen, gebildet von einer seitlich offenen Aussparung, welche ein seitliches Einfügen der Führungsstange g12 und eine begrenzte Axialverschiebung zuläßt, und gebildet von einem Abdeckring 15.1.

Die Wandermutter KB1 ist in eine entsprechende Aussparung 16 des ersten Tragmars TA1 eingesetzt und mittels eines Spindeldeckels 17 axial fixiert. Sie ist, wie bereits angedeutet, als reibungsarme Kugelführungsbuchse ausgebildet. Zur Gleitführung des Tragarms TA1 an seinen beiden außen glatten oder mit axialen Kugelrollnuten versehenen Führungsstangen g11, g12 sind Kugelbuchsen 18.1 und 18.2 vorgesehen. In Bohrungen 72 des Verbindungssteges 1.1 sind Endschalter ES1, ES2 eingesetzt, deren Anstoßhebel es0 in die y-Bewegungsbahn des ersten Tragarms TA1 ragen. Wie strichliert bei $+Y_{max}$ und $-Y_{max}$ eingezeichnet, erfolgt bei Erreichen dieser Stellungen die Abscaltung des Antriebsmotors AM1 für den y-Antrieb, um so ein Weiterfahren und Anstoßen des Tragarms TA1 gegen die Begrenzung der Aussparung 1.10 zu verhindern. Die elektrischen Anschlußleitungen der Endschalter sind bei es10, es20 angedeutet. Auch die übrigen Spindel-Wandermutter-Antriebe SW2, SW3 können entsprechend durch Endschalter geschützt sein (nicht dargestellt), wogegen der x-Antrieb PA normalerweise derartige Endschalter als Schutz gegen Anfahren in Richtung ± x nicht benötigt. Die Schwertanordnung SFS, h1 wird nämlich visuell auf den Inspektionsspalt $a_0$ ausgerichtet und dann beim Einfahren gegen eventuelle Abweichungen durch ein Freilauf-Lineargetriebe FG und ein Pendelgelenk PG geschützt, was noch näher erläutert wird.

Der erste Tragarm TA1 ist an der Trennstelle 19 in zwei Tragarmteile ta11 und ta12 unterteilt, die im Bereich der Trennstelle 19 mittels formschlüssig ineinandergreifender Paßflächen 19.1 und der Spannschrauben 20 fest, spielfrei und verdrehungssicher miteinander verspannt sind. Durch diese Trennstelle sind Herstellung und Montage des gesamten Manipulators erleichtert, weil so der Grundkörper mit dem y-Antrieb SW1 vom z-Antrieb SW2 und vom zweiten Tragarm TA2 getrennt hergestellt und vormontiert werden kann.

Der z-Antrieb SW2 wird im Unterschied zum ebenfalls in z-Richtung arbeitenden Antrieb SW3 für die beiden Führungsschwerter h1, auf den später noch eingegangen wird, im folgenden mit z1-Antrieb bezeichnet (siehe Pfeil z1).

Er ist ebenfalls ein Spindel-Wandermutter-Antrieb, wie es die Großbuchstaben SW seines Bezugszeichens symbolisieren, und entsprechend zum y-Antrieb SW1 aufgebaut, so daß im folgenden auf seine Merkmale nur eingegangen wird, soweit diese unterschiedlich oder zusätzlich zum y-Antrieb SW1 sind. Die beiden Führungsstangen g21, g22 der Geradführung G2 sind im ersten Tragarm TA1 nur jeweils mit ihrem einen Ende eingelassen und verstiftet, ihre anderen Enden sind durch einen riegelförmigen Säulenbock 200 starr miteinander verbunden, welch letzterer auch das zweite Spindellager la22 der Gewindespindel KS2 trägt, deren Lager an ihrem anderen Ende mit la21 bezeichnet ist. Die Kugelführungsbuchse der Gewindespindel KS2 des z1-Antriebs SW2 ist mit KB2 bezeichnet, ihr Antriebsmotor mit AM2, wobei hier die Motorwelle am1 mit der Spindel über ein 90°-Kegelgetriebe mit den beiden Kegelrädern 21, 22 gekuppelt ist. Der zweite Tragarm TA2 ist also mit der mit ihm fest verbundenen Wandermutter KB2 (Kugelführungsbuchse) in Richtung ±z verfahrbar, je nach Drehrichtung der Gewindespindel KS2. Zur Halterung der Führungsstangen g21, g22 und des Lagers la21 weist der erste Tragarm TA1 an seinem Armteil ta12 einen abgewinkelten Fortsatz ta13 auf, und an letzterem ist wieder ein angewinkelter Fortsatz ta14 mit einer in y-Richtung weisenden Befestigungsfläche zur Halterung des zweiten Antriebsmotors AM2 vorgesehen.

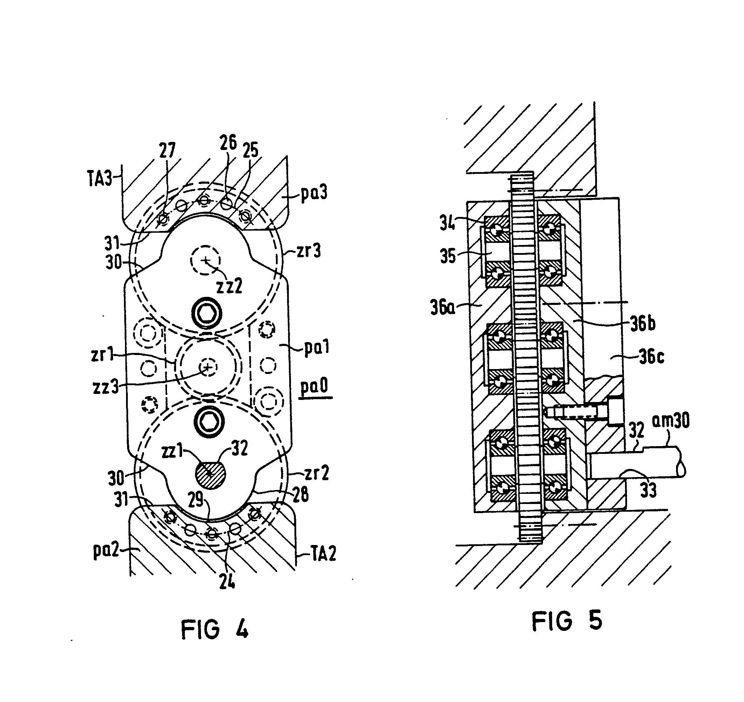

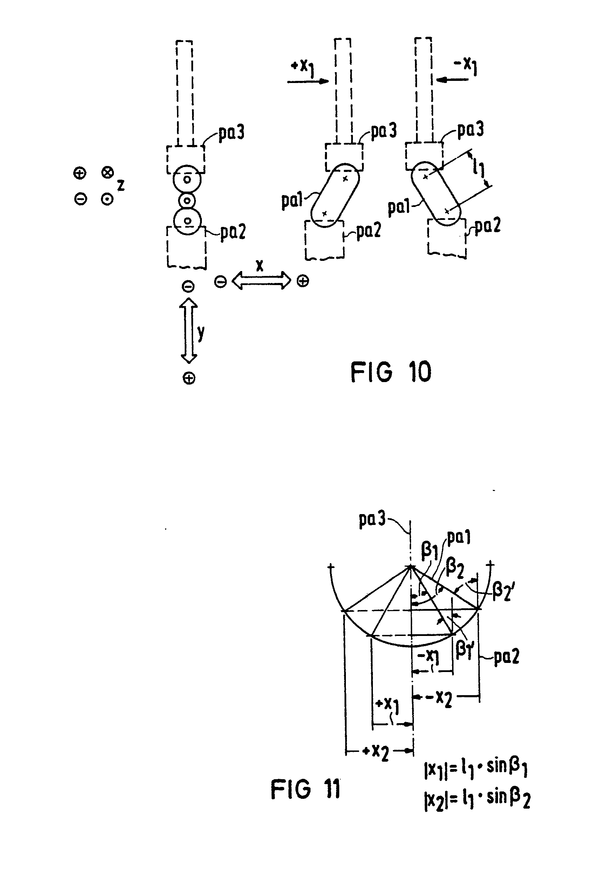

Der zweite Tragarm TA2 trägt an der normal zur z-Richtung orientierten Befestigungsfläche eines Halteflansches 23 einen weiteren Antriebsmotor AM3 für den x-Antrieb PA, welcher—wie es in Verbindung mit Fig. 4 und Fig. 5 erkennbar ist—ein Doppelknick-Gelenk pa0 aufweist. Letzteres besteht aus einer Drei-Laschen-Gelenkverbindung mit einer mittleren Antriebslasche pa1, welche an einen laschenförmigen Fortsatz pa2 des zweiten Tragarms TA2 um eine erste z-Gelenkachse zz1 schwenkbar angelenkt ist und an welche ein laschenartiger Fortsatz pa3 eines dritten Tragarms TA3 um eine zweite z-Gelenkachse zz2 schwenkbar angelenkt ist. Es besteht nun eine solche Getriebeverbindung zwischen den drei Laschen pa1, pa2 und pa3, daß—wie es die schematische Darstellung nach Fig. 10 und 11 verdeutlicht—der Schwenkwinkel $\beta_1'$, $\beta_2'$ usw. der mittleren Antriebslasche pa1 bezüglich der zweiten Antriebslasche pa2 bzw. des zweiten Tragarms TA2 jeweils gleich ist dem Schwenkwinkel $\beta_1$, $\beta_2$ usw. der mittleren Antriebslasche pa1 bezüglich der dritten Antriebslasche pa3 bzw. des dritten Tragarm TA3. Auf diese Weise kann der dritte Tragarm TA3 immer parallel zu sich selbst in Richtung ±x verfahren werden. Fig. 11 verdeutlicht, daß die Winkel $\beta_1$ und $\beta_1'$, $\beta_2$ und $\beta_2'$ usw. jeweils als Wechselwinkel einander gleich sind und daß der Verfahrweg in Richtung +x oder −x sich ergibt durch die Beziehung $x = l_1 \cdot \sin \beta$, wenn

unter $I_1$ die Länge der mittleren Antriebslasche PA1 zwischen den beiden Gelenkachsen zz1 und zz2 verstanden wird. Außerdem machen Fig. 10 und 11 deutlich, daß ein Verfahren in Richtung +x, +x1, +x2 usw. bei Verschwenken der mittleren Antriebslasche pa1 in Uhrzeigersinn erfolgt und ein Verfahren in Richtung −x, −x1, −x2 usw. bei einem Verdrehen der mittleren Antriebslasche in Gegenzeigerrichtung.

Besonders vorteilhaft zur Verwirklichung dieser Steuerungsfunktion ist ein Planetengetriebe, wie es Fig. 4 und Fig. 5 verdeutlichen. Die zweite und dritte Antriebslasche pa2 bzw. pa3 weisen in der ersten z-Gelenkachse zz1 bzw. in der zweiten Z-Gelenkachse zz2 je ein fest mit ihnen verbundenes zweites Zahnrad zr2 und ein drittes Zahnrad zr3 gleichen Durchmessers und gleicher Zähnezahl auf. Die mittlere Antriebslasche pa1 ist mit einem drehbar an ihr um die gleichfalls in z-Richtung weisende Drehachse zz3 gelagerten ersten Zahnrad zr1 versehen, welches sowohl in das zweite Zahnrad zr2 als auch in das dritte Zahnrad zr3 kämmend eingreift, so daß ein Planetengetriebe für den x-Antrieb PA gebildet wird, mit dem zweiten Zahnrad zr2 als Sonnenrad, dem ersten (mittleren) Zahnrad zr1 als erstes Planetenrad und dem dritten Zahnrad zr3 als zweites Planetenrad. Fig. 4 zeigt, daß das zweite und das dritte Zahnrad zr2 und zr3 mit ihrer zugehörigen Antriebslasche pa2 bzw. pa3 drehfest mittels Verstiften verbunden sind, siehe Lochteilkreise 24 und 25 in den beiden Antriebslaschen-Zahnrad-Paarungen pa2—zr2 und pa3—zr3 sowie die auf diesen Lochkreisen angeordneten Bohrungen 26 und die diese durchdringenden Stifte 27.

Die mittlere Antriebslasche pa1 weist an ihren beiden Gelenkenden Zylinderflächen 28 auf, die als konvexe Gelenkköpfe dienen und mit denen sie in entsprechenden konkav-hohlzylindrischen Gelenk-Gegenflächen 29 der zweiten und der dritten Antriebslasche um die erste bzw. zweite z-Gelenkachse zz1 bzw. zz2 gelenkig gelagert ist, wobei der Schwenkwinkel der Lasche, d. h. die Winkel β bzw. β′ (vgl. Fig. 11) durch die Anschläge 30 in beiden Drehrichtungen um die z-Gelenkachsen zz1, zz2 begrenzt sind. D. h., die mittlere Antriebslasche pa1 läuft in ihrer Grenzstellung mit ihren Anschlägen·30 in Form von Schrägflächen gegen die entsprechenden Gegenflächen 31 an der zweiten bzw. dritten Antriebslasche pa2, pa3. Damit ist ein maximaler Hub in Richtung ±x für die dritte Antriebslasche pa3 bzw. den dritten Tragarm TA3 gegeben. Mit der mittleren Antriebslasche pa1 ist die Antriebswelle am30 des dritten Antriebsmotors AM3, und zwar gleichachsig zur ersten z-Gelenkachse zz1, drehfest verbunden, siehe abgeflachtes Wellenende 32, das in eine entsprechende Aussparung 33 der Antriebslasche pa1 eingreift. Letztere ist als ein Gehäuse zur Aufnahme und zur drehbaren Lagerung der drei Zahnräder zr1, zr2 und zr3 ausgebildet, wie es Fig. 5 zeigt. Man erkennt die einzelnen Rillenkugellager 34, pro Zahnrad sind es zwei, an denen letztere mit ihren Lagerzapfen 35 gelagert sind. Die mittlere Antriebslasche pa1 besteht demgemäß aus Gehäuseunterteil 36a und Gehäuseoberteil 36b sowie einem mit dem Gehäuseoberteil verschraubten Mitnehmerteil 36c, in welchen die Motorwelle am30 drehfest eingreift. Die Kontur der Teile 36a bis 36c bei Betrachtung in z-Richtung ist deckungsgleich. Die Teile 36a bis 36c sind miteinander verschraubt und verstiftet. Verschwenkt der Antriebsmotor AM3 mit seinem Wellenende 32 die mittlere Antriebslasche pa1, so wälzt sich das erste Planetenrad zr1 auf dem Sonnenrad zr2 entsprechend dem Schwenkwinkel β ab, gleichzeitig muß aber um einen Winkel der gleichen absoluten Größe, aber in die andere Drehrichtung, das mit dem ersten Planetenrad kämmende zweite Planetenrad zr3 verdreht werden und mit ihm die dritte Antriebslasche pa3, so daß der geschilderte x-Antrieb mit Verstellung der dritten Antriebslasche pa3 bzw. des dritten Tragarms TA3 parallel zu sich selbst gewährleistet ist.

Dieser x-Antrieb ermöglicht es also, durch Einstellung des Verstellwinkels β=0 das gesamte Spezial-Endoskop E an seinem dritten Tragarm TA3 in Flucht zu bringen mit dem zweiten Tragarm TA2 und damit mit dem ersten Tragarm TA1 und dem Grundkörper 1, so daß die Einfügung des Manipulators durch den Montagespalt $s_m$ ermöglicht ist, wie es bereits mit Bezug auf Figuren 1 und 2 angedeutet wurde. Nach dem Einbringen des Manipulators durch den Montagespalt $s_m$ und nach dessen Festspannen kann dann der x-Antrieb PA das Spezial-Endoskop E in die in Fig. 1 und Fig. 2 dargestellte Bereitschaftsstellung verfahren werden. Daran anschließend erfolgt das Einfahren zunächst der beiden Führungsschwerter h1 und daran anschließend der schwertförmigen Sonde SFS des Spezial-Endoskops E. Bei diesen Einfahrvorgängen und entsprechend bei den nach Beendigung der Inspektion erfolgenden Ausfahrvorgängen darf das Spezial-Endoskop E nicht im Inspektionsspalt $a_0$ verklemmen oder durch Anstoßen gegen den Inspektionsspalt begrenzende oder diesem benachbarte Wandteile beschädigt werden.

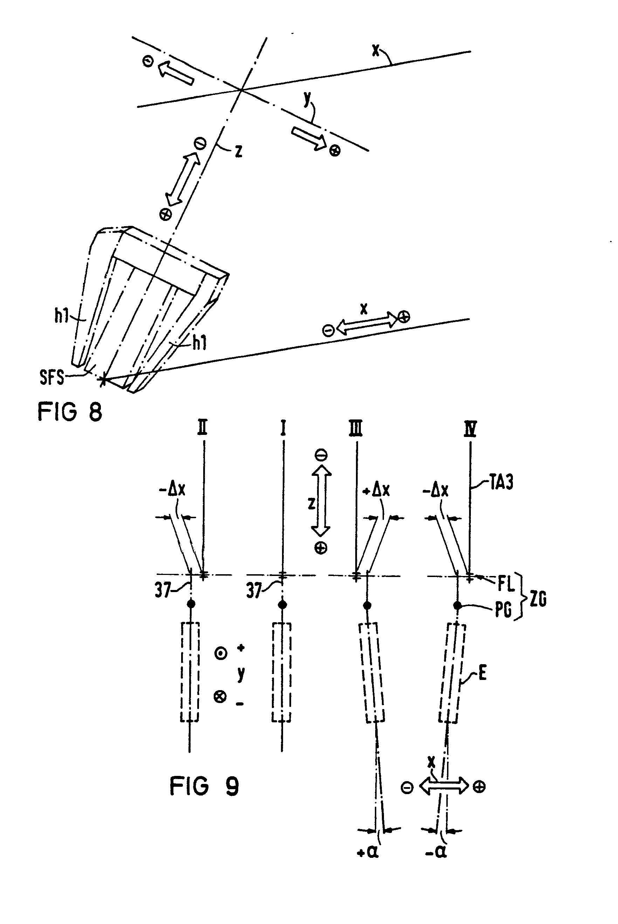

Hierzu ist im einzelnen vorgesehen (vgl. Fig. 3) daß das die schwertförmige Sonde SFS mit bildleitenden Optiken BL und bildbeleuchtenden Optiken BB aufweisende Spezial-Endoskop E von einem Endoskop-Aufnahmekörper EA gehalten und letzterer mit dem Tragarm TA3 über ein der nachgiebigen Feinpositionierung der schwertförmigen Sonde SFS im Inspektionsspalt $a_0$ (vgl. Fig. 2) dienendes Zwischenglied ZG verbunden ist. Das Zwischenglied ZG gestattet ein lineares Ausweichen der schwertförmigen Sonde SFS und entsprechend auch der Führungsschwerter h1, h1 in Anpassung an die Begrenzung des Inspektionsspaltes $a_0$ im Millimeter-Kleinbereich ±Δx der Koordinatenrichtung x und ein pendelndes Ausweichen der Sondenanordnung SFS, h1 um eine in y-Richtung der Spaltebene y—z gerichtete Pendelachse $y_p$ im Winkelkleinbereich von wenigen Graden. Es überlagert sich deshalb der Bewegungssteuerung des dritten Tragarmes TA3 in den drei Koordinatenrichtungen ±x, ±y und ±z eine Freilaufbewegung in Richtung ±Δx und eine Pendelausweichbewegung in Richtung ±α, wie es in Fig. 8 und Fig. 9 schematisch verdeutlicht ist. Fig. 8 zeigt ein Ortskoordinaten-Kreuz mit den Koordinatenrichtungen x, y, z, wobei die Sondenanordnung SFS, h1 jeweils in die Richtungen ±x, ±y und ±z verfahren werden kann. Die x-Richtung ist die Wellenachsrichtung des Scheibenläufers nach dem Anwendungsbeispiel der Figuren 1 und 2, die z-Richtung ist entweder eine radiale Richtung bezüglich der Wellenachse x oder aber achsparallele zu einer radialen Richtung, und die y-Richtung steht senkrecht auf den Richtungen x und z, est ist also eine tangentiale Richtung innerhalb einer achsnormalen Ebene. Zur reproduzierbaren Positionierung und damit zur Dokumentation gefundener Fehlerstellen genügt es, die Koordinaten y und z anzugeben bzw. zu erfassen; die x-Koordinate ist dazu nicht erforderlich, sondern sie ist nur erforderlich zum genauen Einfahren der Sondenanordnung in den Inspektionsspalt bzw. zum Herausfahren aus diesem.

Fig. 9 zeigt schematisch anhand von vier Positionierungen des Spezial-Endoskops E, welches über das Zwischenglied ZG mit dem dritten Tragarm TA3 verbunden ist, daß das nachgiebige Zwischenglied ZG ein Freilauf-Lineargetriebe FL aufweist, mit einem in Richtung ±Δx linear verfahrbaren Freilaufarm 37, an welchem über das Pendelgelenk PG das Spezial-Endoskop E angelenkt ist. Position I zeigt das nachgiebige Zwischenglied ZG in seiner Nullstellung mit Δx=0 und Pendelwinkel α=0. In Position II ist der Freilaufarm 37 mit dem Endoskop E um das kleine Stück −Δx verfahren. In Position III ist der Freilaufarm 37 mit dem Endoskop E entgegengesetzt um ein kleines Stück +Δx verfahren; und zugleich ist das Endoskop im Pendelgelenk PG um einen kleinen Winkelausschlag +α verschwenkt. In Position IV ist die Linearverschiebung so wie in Position II, nämlich −Δx, dagegen ist das Endoskop E in seinem Pendelgelenk PG um einen kleinen Winkel −α entgegengesetzt zur Position III verschwenkt.

Zur Erläuterung der mechanischen Wirkverbindung des Spezial-Endoskops E (nachfolgend vereinfacht als Endoskop bezeichnet) über das nachgiebige Zwischenglied ZG mit dem dritten Tragarm TA3 sei zunächst auf die wichtigsten Endoskop-Bauteile eingegangen; eine detailliertere Erläuterung erfolgt, soweit erforderlich, weiter unten. Wie es Fig. 3A in Verbindung mit Fig. 7 zeigt, ist der Anschlußkasten 38 des Endoskops E ein im wesentlichen rechteckiges Blech-Gehäuse mit einem stufenförmig verjüngten Gehäusefortsatz 38.1, welcher keilförmig zugespitzt in Richtung auf die schwertförmige Sonde SFS im Bereich 38.2 zuläuft. Die Gehäuseteile 38.1, 38.2 dienen zum Einspannen der schwertförmigen Sonde SFS, im folgenden vereinfacht als Schwert bezeichnet. Dieses Schwert hat in Richtung x lediglich eine Stärke von 1,8 mm, es besteht aus zwei flachen Hälften, in welche auf den Innenseiten schmale Nuten oder Kanäle eingeformt sind zur Aufnahme der bildbeleuchtenden Optiken, als Ganzes mit BB bezeichnet, und der bildleitenden Optiken, als Ganzes mit BL bezeichnet. Die bildbeleuchtenden Optiken BB bestehen aus dünnen Lichtleitern, welche an ihren Enden primatisch zur Erzielung bestimmter Lichtaustrittswinkel bezüglich des Inspektionsortes abgeschliffen sind. Die bildleitenden Optiken werden von Lichtleitersträngen, Linsen und Prismensystemen gebildet (nicht näher dargestellt). Der Verlauf der bildleitenden Optiken BL innerhalb des Schwertes SFS ist strichpunktiert angedeutet, der Verlauf der bildbeleuchtenden Optiken BB gestrichelt. Sie führen zu einer innerhalb eines ersten fensterartigen Ausschnittes 39 angeordneten Übersichts-Optik e1 an der Frontseite des Schwertes SFS und zu einer seitlich davon beabstandeten, innerhalb eines zweiten fensterartigen Ausschnittes 40 angeordneten Makro-Optik e2. Die Übersichts-Optik e1 dient dazu, das Schwert innerhalb des Inspektionsspaltes $a_0$ zu positionieren und dazu, zunächst einer erste Übersicht über die Materialoberflächen zu gewinnen; die Makro-Optik hat einen höheren Vergrößerungsgrad und dient dann der eigentlichen Material- bzw. Riß-Untersuchung. Durch das spiegelbildblich gezeichnete Fensterpaar 39′, 40′, in welche entsprechende Übersichts- und Makro-Optiken e1′, e2′ gehören, ist angedeutet, daß—anhängig davon, von welcher Seite innerhalb des Inspektionsspaltes der zu inspizierende Bereich angefahren wird—auch eine gespiegelte Anordnung der Optiken am Frontende des Schwertes SFS möglich ist.

Wenn man sich in Richtung −y (vgl. Fig. 2 und Fig. 3B) bewegt, dann erhält man zunächst ein Bild durch die Übersichts-Optik e1 auf dem Monitor, und erst bei Weiterfahren in der gleichen Richtung ein vergrößertes Bild durch die Makro-Optik e2.

Auf die Führungsschwerter h1 wird ebenfalls weiter unten noch detaillierter eingegangen. Sie haben ebenso wie das Schwert SFS eine Stärke in Richtung x von 1,8 mm, so daß sie in einen Spalt mit der Weite von 2 mm problemlos einfahren werden können. Beide Führungsschwerter h1 sind über je ein Zwischenstück, das in Fig. 3A obere über Zwischenstück 41 und das in Fig. 3A untere über Zwischenstück 42 an Fahrblechen 43a, 43b befestigt, welche als Ganzes mit 43 bezeichnet werden (vgl. auch Fig. 6). Diese Fahrbleche 43 sind in der z-Richtung durch den z11-Antrieb SW3 geführt verfahrbar unabhängig vom Schwert SFS, worauf weiter unten noch eingegangen wird.

Der Anschlußkasten 38 des Endoskops E ist an seiner in Richtung +y weisenden schmalen Längsseite im Bereich seiner Gehäuseteile 38.1, 38.2 an der Montagefläche 44 des Aufnahmekörpers EA befestigt mittels Inbusschraube 45 und Zylinderstift 46. Diese Befestigungselemente durchdringen den L-Schenkel ea1 des Aufnahmekörpers EA, welcher bei Betrachtung in Richtung +x eine L- oder stiefelartige Kontur aufweist, mit einem als massiver Stahlblock ausgeführten "Schaftteil" ea2, welcher mit dem L-Fortsatz ea1 integral ist. Der Schaftteil ea2 weist eine Aussparung 47 zur Aufnahme eines Drehlager la32 für die Gewindespindel S3 auf, deren anderes Ende im Bereich des Antriebsmotors AM4 an der Lagerplatine 48 mittels des Drehlagers la31 gelagert ist. Im Schaftteil ea2 des Aufnahmekörpers EA ist weiterhin das eine Ende der Führungsstange g3 in eine entsprechende Bohrung 49 eingesetzt und darin verstiftet. Das andere Ende der Führungsstange g3 der Geradführung G3 trägt die Lagerplatine 48 und ist mit dieser fest verbunden. Die weitere Erläuterung des z11-Antriebs SW3 erfolgt weiter unten; zunächst wird die Erläuterung von Aufbau und Funktion des nachgiebigen Zwischengliedes ZG vervollständig.

Das Pendelgelenk PG des nachgiebigen Zwischengliedes ZG (vgl. Fig. 3A in Verbindung mit Fig. 12) wird gebildet durch einen Lagerzapfen ea3, welcher mit dem Schaftteil ea2 des Aufnahmekörpers EA fest verbunden bzw. mit diesem einstückig ist und sich in Richtung +y erstreckt. Der Lagerzapfen ea3 ist innerhalb des Gelenkauges 50 des Freilaufarmes 37 des Freilauf-Lineargetriebes FL unter Zwischenschaltung eines Lagers 51, und zwar eines Doppel-Axiallagers/Radiallagers drehbar gelagert. Dabei sind die inneren Lagerkränze 51a1, 51a2 mit dem Innenumfang des Gelenkauges 50 fest verbunden, wobei die beiden äußeren Lagerkränze 51b1, 51b2 des Axiallagers zusammen mit den inneren Lagerkränzen 51a1, 51a2 und dem Lagerauge 50 auf dem Lagerzapfen ea3 durch die Spannschiebe 52 und die diese durchdringende, in den Lagerzapfen ea3 eingeschraubte Spannschraube 53 axial fixiert sind.

Der innere Lagerkranz 51a1 weist eine Ringkammer an seinem Innenumfang auf, in welcher Zylinderrollen 510 drehbar gelagert untergebracht sind, welche sich auf der Hülse 511 des Zapfens ea3 abwälzen können. Eine weitere Hülse 512 sitzt auf dem Zapfen ea3 im Bereich des Axiallagers 51a2, 51b2. Die Hülsen bestehen aus einem geeigneten Lagerwerkstoff, wie insb. Messing. Dabei bildet die Fußplatte 54 des Lagerzapfens ea3 einen Axialanschlag für den Einsatz des Doppel-Axiallagers/Radiallagers 51.

Der Freilaufarm 37 mit dem Pendellager PG weist einen winkligen Fortsatz 37a auf, an dem das eine Ende einer Blattfeder 55 eingespannt ist, welche mit ihrem freien Ende am Fußplattenteil 54 des Aufnahmekörpers EA angreift, d. h., an einer Seitenfläche desselben anliegt oder (wie vorgesehen) in einen ausgefrästen Schlitz eingreift. Im dargestellten entspannten Zustand ist diese Blattfeder 55 in z-Richtung orientiert und definiert so die Nullstellung des Pendelausschlages (vgl. Position I oder II in Fig. 9). Andererseits läßt diese Blattfeder auch geringe Pendelausschläge in der Größenordnung Winkelminuten bis zu wenigen Winkelgraden zu. Anstelle der verwendeten Blattfeder 55 kämen grundsätzlich auch andere Federelemente in Frage, z. B. Drehfedern. Die Federcharakteristik sollte linear oder noch besser progressiv sein, so daß bei kleinen Auslenkungen kleine Federkräfte, bei größeren Auslenkungen jedoch überproportional anwachsende größere Federkräfte als Rückstellkräfte am Aufnahmekörper EA angreifen. Die dargestellte Blattfederanordnung 55 hat den Vorteil der Einfachheit bei guter Wirksamkeit.

Fig. 3A in Verbindung mit Fig. 7 und Fig. 12 zeigt, daß der Freilaufarm 37 des Freilauf-Lineargetriebes FL einen im Querschnitt der y-z-Ebene T-förmigen Lagerkopf 37b aufweist, d. h., sowohl der Freilaufarm 37 als auch sein Kopf 37b weisen ein Rechteckprofil mit zueinander planparallelen Begrenzungsflächen-Paaren 370a, b, 371a, b und 372a, b auf. Alle diese Begrenzungsflächen sind in Richtung x orientiert und außerdem die Begrenzungsflächen-Paare 370a, b, und 371a, b in Richtung y und das Begrenzungsflächen-Paar 372a, b in Richtung z.

Der Freilaufarm 37 ist nun mit seinem Kopf 37b und den daran befindlichen Begrenzungsflächen in Richtung ±Δx linear verschiebbar gelagert innerhalb des Freilaufgehäuses fl1 und zwar mittels an seinen Begrenzungsflächen angreifender Rillenkugellager-Einsätze, die generell mit 56 bezeichnet sind und im einzelnen mit 56a, 56b; 57a, 57b; und 58a, 58b. Die vorgenannten sechs Einsätze 56a bis 58b kommen jeweils zweifach und in Richtung x zueinander beabstandet vor, damit eine präzise Führung in x-Richtung gewährleistet ist, wie es aus Fig. 7 erkennbar ist, so daß insgesamt zwölf kleine Kugellager-Einsätze zur Führung des Freilaufarmes 57 verwendet sind. Die beiden mittels Durchgangsschrauben 59 zusammengespannten Hälften fl11, fl12 des Freilaufgehäuses fl1 weisen in ihrem Inneren entsprechende Kammern bzw. Aussparungen zur Aufnahme der Kugellager-Einsätze und des Kopfes 37b des Freilaufarmes 37 auf, vgl. Fig. 3A. Die Schäfte der Schrauben 59, bezeichnet mit 59a, durchdringen nun den Kopf 37b und den daran angrenzenden Teil des Freilaufarmes 37 in Richtung y in je einem Langloch 60. Durch die Größe bzw. Ausdehnung dieses Langloches in Richtung x ist die Größe des Freilaufes in beiden Richtungen ±Δx definiert. Die Schraube 61 hat keine Freilauf-Funktion; sie dient allein der Verspannung der Gehäusehälften fl11, fl12. Die Gehäusehälfte fl1 weist einen Ansatz pa3 auf, welcher die dritte Antriebslasche des bereits beschriebenen x-Antriebs PA ist. Demgemäß ist das gesamte Gehäuse fl1 der dritte Tragarm TA3, welcher über das nachgiebige Zwischenglied ZG, bestehend aus dem Freilauf-Lineargetriebe FL und dem Pendelgelenk PG, die Verbindung zum Aufnahmekörper EA herstellt. Das Schwert SFS ist an seinen beiden Schmalseiten von je einem Führungsschwert h1 abgeschirmt, wie bereits erwähnt, wobei die beiden Führungsschwerter konvergent zur Spitze des Schwertes SFS zulaufen. Auf diese Weise dienen die Führungsschwerter h1 als Einrichtung zum Schutz des Schwertes SFS beim Einführen und Herausziehen. Das eine (in Fig. 3A obere) Führungsschwert h1 ist mit schematisch angedeuteten internen Kanälen a, b, c versehen, welche mit einer Düsenöffnung 62 kommunizieren. Diese ist am äußeren Ende des Führungsschwertes angeordnet und mündet seitlich, d. h.

im wesentlichen in Richtung x, so nach außen, daß über diese Düsenöffnung 62 Penetrierflüssigkeit über den Kanal a oder Rißprüfpulver über den Kanal b oder Heißluft über den Kanal c zur Inspektionsstelle geleitet werden können. Über den Kanal c bzw. einen gesonderten (nicht dargestellten) Kanal, welcher dann mit einer gesonderten Düsenöffnung zu versehen wäre, kann ferner noch Reinigungsflüssigkeit an den Inspektionsort herangebracht werden. Dazu wird in Kraftwerken im allgemeinen Kondensatflüssigkeit bzw. aufbereitetes Wasser verwendet.

Das gegenüberliegende Führungsschwert h1 (in Fig. 3A das untere) ist mit einem internen Absaugekanal d größeren Querschnitts als die Kanäle, a, b, c und mit einer entsprechenden Absaugöffnung 63 versehen. Über diesen Kanal d kann dann die überschüssige Reinigungsflüssigkeit bzw. können überschüssiges Penetriermittel und Rißprüfpulver abgesaugt werden. Alle beschriebenen Kanäle a bis d führen zu internen Kanälen innerhalb des oberen Zwischenstückes 41 (Kanäle a, b, c) und zu internen Kanälen im unteren Zwischenstück 42 (Kanal d). Diese internen Anschlußkanäle in den Zwischenstücken 41, 42 sind nicht dargestellt; sie sind flüssigkeitsdicht mit den genannten Kanälen a bis d verbunden und ihrerseits mit flüssigkeitsdichten Schlauchanschlüssen versehen, welche gleichfalls nicht dargestellt sind. Entsprechende Schläuche führen dann zur Hilfseinrichtung H (Fig. 1). Der Absaugkanal d mit seiner Absaugöffnung 63 kann auch aus mehreren Einzelkanälen mit entsprechenden mehreren über das untere Ende des Führungsschwertes h1 verteilten Absaugöffnungen bestehen. Die Führungsschwerter h1 können zur Verhinderung des Anstoßens gegen einen Nutengrund oder dergleichen mit einem Anstoßfühler 64 versehen sein, dessen elektrische Zuleitungen 64a am Führungsschwert h1 verlegt sind. Dieser Anstoßfühler kann z. B. ein kapazitiver Fühler sein, der dann, wenn er mit einem Metallteil in Berührung kommt, anspricht. Des weiteren kann die schmale Frontseite des Schwertes SFS mit einem elastisch deformierbaren, blattfederartigen Schutzbügel 65 geschützt sein, um so eine Beschädigung des Schwertes mit Sicherheit auszuschließen. Auch ein solcher Schutzbügel kann zusätzlich mit einem Anstoßfühler versehen sein, damit ein unbeabsichtigtes Anfahren des Schwertes SFS beim Prüfvorgang verhindert ist.

Der z11-Antrieb, den man auch als Subantrieb zum z1-Antrieb SW2 betrachten kann, dient dem Verfahren der Führungsschwert-Anordnung $h_1$—$h_1$ in Richtung ±z. Er ist ein Spindel-Wandermutter-Antrieb mit der Gewindespindel S3, der Geradführung G3 und der Führungsstange g3. Der Prüfschlitten 650, ausgebildet als Kugelführungsbuchse zwecks reibungsarmer Führung an der Führungsstange g3 weist die an ihm befestigte Wandermutter 66 in Form einer Gewindebuchse auf, innerhalb welcher die Gewindespindel S3 mit ihrem Außengewinde s31 verdrehbar ist. An der Lagerplatine 48 ist der schon erwähnte Antriebsmotor AM4 befestigt, und zwar derart, daß seine Antriebswelle am31 achsparallel zu den Achsen der Führungsstange g3 und der Gewindespindel S3 umläuft. Die Antriebswelle am31 ist über ein Antriebsritzel am32 und den Zahnriemen 67 mit dem Antriebszahnrad 68 der Gewindespindel S3 gekuppelt.

Motorgehäuse und Zahnriementrieb sind jeweils durch Abdeckhauben 680 bzw. 69, die an der Platine 48 befestigt sind, abgedeckt. Die beiden generell mit 43 bezeichneten Fahrbleche 43a, 43b, die einen trapezförmigen Grundriß aufweisen (vgl. auch Fig. 6; in Fig. 3A ist das eine Fahrblech 43b weggelassen) sind mit dem Prüfschlitten 650 an dessen beiden Längsseiten fest verbunden, so daß sie also gemeinsam mit den Führungsschwertern h1 vom Prüfschlitten 650 genau in Richtung ±z verfahren werden können. Am anderen Ende liegen die Fahrbleche auf der Fußplatte 54 des Aufnahmekörpers EA an; an dieser Stelle kann durch einen zusätzlichen Nut-Feder-Eingriff eine weitere Gleitführung für die Fahrbleche 43a, 43b vorgesehen sein (nicht dargestellt). Bei Betätigung des Antriebsmotors AM4 können mithin die Führungsschwerter h1 mit ihren Fahrblechen relativ zum Aufnahmekörper EA in Richtung +z (vgl. Fig. 8) verfahren werden bis sie mit ihren Enden am Inspektionsort angelangt sind, wo dann vor dem eigentlichen optischen Inspektionsvorgang die bereits erwähnten Arbeitsvorgänge der Reinigung des Inspektionsortes mit Kondensat, das Trocknen, das Penetrieren, die Zuführung von Rißprüfpulver und Absaugevorgänge durchgeführt werden können. Nach Vorbereitung der Inspektionsstelle durch die geschilderten Behandlungsschritte kann dann das Schwert SFS in seine Prüfposition verfahren werden. Das geschieht so, daß zunächst die Führungsschwerter aus ihrer vorgeschobenen Behandlungsposition durch den Antrieb SW3 zunächst wieder so weit zurückgefahren werden, bis sie gleichauf mit dem Schwert SFS stehen (sowie in Fig. 3A).

Nun kann durch Betätigung des z1-Antriebs SW2 das Schwert SFS gemeinsam mit seinen Führungsschwertern h1 in Richtung +z in seine Prüfposition verfahren werden, wobei—wenn die richtige x-Position einmal gefunden ist—dann nur noch das Verfahren längs der Koordinaten y und z von Bedeutung ist, und diese Koordinaten sind dann auch für die Dokumentation des Materialzustandes im betreffenden Inspektionsspalt maßgebend.

Die Führungsstange g3 weist wenigstens eine Längsrille auf, in welcher die innerhalb des Führungsbuchsenteils 650a des Führungsschlittens 650 angeordneten Kugeln rollen können. Diese Ausführung ist nicht näher dargestellt.

Zum Spezial-Endoskop EA ist noch nachzutragen, daß zum Fenster 39 der Übersichts-Optik e1 der mittlere strichpunktiert dargestellte Kanal BL1 für die bildleitende Optik verläuft, und zu seinen beiden Seiten sind die bildbeleuchtenden Optiken BB11 und BB12 in Form von Lichtleitern innerhalb entsprechender interner Kanäle des Schwertes SFS verlegt.

Für die Makrooptik ist eine höhere Lichtleistung erforderlich, und so sind vier bildbeleuchtende Optiken BB21 bis BB24 in Form von Lichtleitern vorgesehen, welche innerhalb des Fensters 40 der Makro-Optik e2 aus dem Schwert herausragen und zur Beleuchtung der jeweiligen Inspektionsstelle dienen, wobei dann der Bildübertragung die mittig innerhalb der genannten bildbeleuchtenden Optiken verlegte bildleitende Optik BL2 (strichpunktiert dargestellt) vorgesehen ist. Der Anschlußkasten 38 des Endoskops EA enthält in seinem Inneren unter anderem die beiden verstellbaren TV-Adapter für den Makro- und den Übersichts-Sondenteil, den Lichtleiteranschluß zur Einkopplung der UV-Strahlung in die bildbeleuchtenden Optiken. Mit 70.1 und 70.2 sind Gewindestutzen zur Halterung bzw. zum Anschrauben der Fernsehkameras T1, T2 bezeichnet, welche zur Fernübertragung der von den Optiken e1, e2 aufgenommenen Bilder dienen.

Im Inneren der Hilfsschwerter h1 lassen sich im Rahmen einer Sonderausführung auch Wirbelstromprüfsonden unterbringen, womit sich das Anwendungsgebiet des Spezial-Endoskops E durch eine Wirbelstromprüfung der zu untersuchenden Oberflächenzonen erweitern läßt. Des weiteren läßt sich, vorzugsweise anstelle des in Fig. 3a dargestellten oberen Hilfsschwertes, ein U-förmiges Hochstromjoch am Zwischenstück 41 befestigen, welches über entsprechende elektrische Hochstrom-Leitungen an eine (nicht dargestellte) Hochstromerzeuger-Einheit zur magnetischen Rißprüfung anschließen läßt. Bei einer solchen magnetischen Rißprüfung wird mit einer Flüssigkeit gearbeitet, in welcher Magnetpulver suspendiert ist und natürlich mit fluoreszierenden Mitteln, damit die über die bildbeleuchtenden Optiken BB auf das zu untersuchende Objekt bzw. die Inspektioszone geworfenen UV-Strahlen in sichtbares Licht umgewandelt werden können. Ein solches U-förmiges Hochstrom-Joch erzeugt am Inspektionsort ein starkes Magnetfeld, wobei die Magnetpulver-Partikel dort, wo feine Haarrisse oder dergleichen vorhanden sind, sich entsprechend ordnen, weil an solchen Stellen ein anderer Verlauf der magnetischen Feldlinien als in "gesunden" Materialzonen gegeben ist.

Wenn auch Fig. 2 das Manipulatorsystem zwischen zwei einandern benachbarten Radscheiben eingespannt dargestellt ist, so ist in Endbereichen eines Scheibenläufers auch eine einseitige Einspannung des Manipulatorsystems möglich, indem sein Grundkörper 1 mit anschraubbaren Krallen versehen wird, die in Ringnuten der Radköpfe an z. B. drei zueinander tangential beabstandeten Stellen eingreifen, wobei die hydraulischen Spannzylinder dann an der Außenseite der Radscheibe angreifen und die Krallen gegen eine der Stirnflächen der Ringnuten axial verspannen. Auch diese Variante der einseitigen Einspannung ist in der Zeichnung nicht dargestellt; ihre Erläuterung diente zum besseren Verständnis der vielseitigen Anwendbarkeit des Manipulatorsystems.

**Patentansprüche**

1. Manipulatorsystem zur Bewegungssteuerung, Versorgung und Signalabfrage eines Spezial-Endoskops (E), welches zur Untersuchung der Oberflächenstruktur in engen Inspektionsspalten ($a_0$) von Bauteilen des Maschinen- und Apparatebaues, insbesondere zur optischen Rißprüfung, dient, dadurch gekennzeichnet,

—daß das eine schwertförmige Sonde (SFS) mit bildleitenden und bildbeleuchtenden Optiken (BL, BB) aufweisende Spezial-Endoskop (E) von einem Endoskop-Aufnahmekörper (EA) gehalten und der Endoskop-Aufnahmekörper an einem Manipulator-Tragarm (TA3) gelagert ist, welch letzterer mit einem Koordinaten-Fahrwerk des Manipulators (M) mindestens in Einführrichtung z, in Richtung x der Spaltweite bzw. wellenachsparallel sowie senkrecht zu den Koordinaten z und x in Richtung y bewegbar ist, und

—daß der Aufnahmekörper (EA) mit dem Manipulator-Tragarm (TA3) über ein der nachgiebigen Feinpositionierung der schwertförmigen Sonde im Inspektionsspalt dienendes Zwischenglied (ZG) verbunden ist, welches ein lineares Ausweichen der schwertförmigen Sonde (SFS) in Anpassung an die Spaltbegrenzung im Millimeter-Kleinbereich ($\pm\Delta x$) der Koordinatenrichtung x und ein pendelndes Ausweichen der Sonde um eine in y-Richtung der Spaltebene (y—z) gerichtete Pendelachse ($y_p$) im Winkelkleinbereich von Bogenminuten bis zu wenigen Graden gestattet.

2. Manipulatorsystem nach Anspruch 1, dadurch gekennzeichent, daß der Manipulator (M) zur Verspannung im Ringspalt ($s_m$) zwischen zwei einander axial benachbarten Radköpfen (rs11, rs12) des Scheibenläufers (L) einer Dampfturbine einen flachen Grundkörper (1) aufweist, der quer zu seiner tangentialen Längserstreckung mit axial wirkenden Spannkörpern, insbesondere hydraulischen Spannzylindern (Hy, Hy1, Hy2, Hy3), versehen ist.

3. Manipulatorsystem nach Anspruch 2, dadurch gekennzeichnet, daß am Grundkörper (1) eine y-Antriebseinrichtung (SW1) vorgesehen ist, welche einen sich in z-Richtung, d.h. radial einwärts, erstreckenden und in y-Richtung, d.h. quer zur Maschinenlängsachse und insbesondere horizontal, am Grundkörper (1) bewegbaren ersten Tragarm (TA1) umfaßt, und

—daß am ersten Tragarm (TA1) eine zweite, z-Antriebseinrichtung (SW2) befestigt ist, welche in Antriebsverbindung steht mit einem zweiten, in z-Richtung bewegbaren und am ersten Tragarm (TA1) gelagerten zweiten Tragarm (TA2), welch letzterer sich im wesentlichen in y-Richtung erstreckt und mit einer x-Antriebseinrichtung (PA) versehen ist, mittels welcher ein dritter Tragarm (TA3) des Manipulators (M) in Richtung ±x verstellbar ist, und

—daß der dritte Tragarm (TA3) der Manipulator-Tragarm ist, mit welchem das Zwischenglied (ZG) verbunden ist.

4. Manipulatorsystem nach Anspruch 1, dadurch gekennzeichnet, daß die schwertförmige Sonde (SFS) des Endoskops (E) an ihren beiden Schmalseiten von je einem Führungsschwert (h1) abgeschirmt ist, wobei die beiden Führungsschwerter konvergent zur Spitze der schwertförmigen Sonde (SFS) zulaufen, daß diese Führungsschwerter (h1) als Einrichtung zum Schutz der schwertförmigen Sonde (SFS) beim Einführen und Herausziehen dienen und zusätzlich mit internen Kanälen (a, b, c, d) und Düsenöffnungen (62, 63) versehen sind, über welche Reinigungsflüssigkeit, Penetrierflüssigkeit und Rißprüfpulver, sowie Heißluft zum Inspektionsort zuführbar sind und eine Absaugung überschüssiger Reinigungs- und Penetrierflüssigkeit durchführbar ist.

5. Manipulatorsystem nach Anspruch 4, dadurch gekennzeichnet, daß die Führungsschwerter mit einem am Aufnahmekörper in z-Richtung geführt gelagerten Schlitten (650) und mittels einer am Aufnahmekörper (EA) befestigten Sub-Antriebseinrichtung (SW3) relativ zur schwertförmigen Sonde in z-Richtung (z11) bewegbar gelagert sind.

6. Manipulatorsystem nach Anspruch 3, dadurch gekennzeichnet, daß die x-Antriebseinrichtung ein Doppelknick-Gelenk umfaßt, bestehend aus einer Drei-Laschen-Gelenkverbindung mit einer mittleren Antriebslasche (pa1), die an den zweiten Tragarm (TA2) bzw. seine Lasche (pa2) um eine erste z-Gelenkachse (zz1) schwenkbar angelenkt ist und an welche der dritte Tragarm (TA3) bzw. seine Lasche (pa3) um eine zweite z-Gelenkachse (zz2) schwenkbar angelenkt sind, und

weiter gekennzeichnet durch eine solche Getriebeverbindung zwischen den drei Laschen (pa2—pa1—pa3), daß der Schwenkwinkel (β′) der mittleren Antriebslasche (pa1) bezüglich des zweiten Tragarms (TA2) jeweils gleich ist dem Schwenkwinkel (β) der mittleren Antriebslasche (pa1) bezüglich des dritten Tragarms (TA3).

7. Manipulatorsystem nach Anspruch 6, dadurch gekennzeichnet, daß der zweite und dritte Tragarm (TA2, TA3) bzw. die zweite und dritte Antriebslasche (pa2, pa3) in der ersten bzw. zweiten z-Gelenkachse (zz1) bzw. (zz2) je ein fest mit ihnen verbundenes zweites (zr2) und drittes Zahnrad (zr3) gleichen Durchmessers und gleicher Zähnezahl aufweisen und daß die mittlere Antriebslasche (pa1) mit einem ersten Zahnrad (zr1) sowohl in das zweite (zr2) als auch in das dritte Zahnrad (zr3) kämmend eingreift, so daß ein Planetengetriebe (PA) mit dem zweiten Zahnrad (zr2) als Sonnenrad, dem ersten Zahnrad (zr1) als erstes Planetenrad und dem dritten Zahnrad (zr3) als zweites Planetenrad gebildet ist, und daß die Antriebswelle eines dritten Antriebsmotors (AM3) mit der mittleren Antriebslasche (pa1) gleichachsig zur ersten z-Gelenkachse (zz1) drehfest verbunden ist.

8. Manipulatorsystem nach Anspruch 6 oder 7, gekennzeichnet durch Anschläge (30) an beiden Gelenkenden der mittleren Antriebslasche (pa1) zur Begrenzung des Schwenkwinkels (β) .und damit des Fahrweges in Richtung (±x) für den dritten Tragarm (TA3).

9. Manipulatorsystem nach Anspruch 1, dadurch gekennzeichnet, daß das nachgiebige Zwischenglied ein Freilauf-Lineargetriebe (FL) aufweist, dessen Gehäuse mit dem dritten Tragarm (TA3) des Manipulators (M) identisch oder mit diesem fest verbunden ist,

—daß im Gehäuse des Freilauf-Lineargetriebes (FG) ein rollengelagerter Freilaufarm (37) innerhalb des Kleinbereiches (±x) bewegbar ist,

—daß am freien Ende des Freilaufarmes (37) ein Gelenkauge (50) angeordnet ist,

—daß im Gelenkauge (50) des Freilaufarmes (37) der Endoskop-Aufnahmekörper (EA) mit einem Gelenkzapfen (ea3) um seine Pendelachse (yₚ) drehbar gelagert ist und

—daß zur Drehwinkelbegrenzung der Pendelbewegung ein Federelement (55) einerseits am Aufnahmekörper (EA) und andererseits am Freilaufarm (37) angreift.

10. Manipulatorsystem nach Anspruch 9, dadurch gekennzeichnet, daß das Federelement (55) eine Blattfeder ist, welche im entspannten Zustand in z-Richtung orientiert die Nullstellung des Pendelausschlages definiert.

11. Manipulatorsystem nach Anspruch 9, dadurch gekennzeichnet, daß zwischen dem Gelenkzapfen (ea3) des Aufnahmekörpers (EA) und dem Gelenkauge (50) des Freilaufarmes (37) Axialkugellager (51) eingefügt sind.

12. Manipulatorsystem nach einem der Ansprüche 3, 6, 7 oder 8, dadurch gekennzeichnet, daß der y-Antrieb (SW1) für den ersten Tragarm (TA1) und der z-Antrieb (SW2) für den zweiten Tragarm (TA2) jeweils eine Kugelgewindespindel (KS1 bzw. KS2) und eine als Kugelführungsbuchse dienende, drehfest und axial-beweglich auch der Spindel gelagerte Wandermutter (KB1 bzw. KB2) aufweisen, daß die Wandermuttern (KB1, KB2) jeweils an ihrem ersten (TA1) bzw. zweiten Tragarm (TA2) befestigt und die Tragarme jeweils an am Grundkörper (1) bzw. dem ersten Tragarm (TA1) befestigten Geradführungen (G1) bzw. (G2) in ihrer Fahrrichtung (y) bzw. (z) geführt sind, wobei die mit der zum y- bzw. z-Antrieb gehörenden Spindeln (KS1 bzw. KS2) gekuppelten Antriebsmotore (AM1 bzw. AM2) am Grundkörper (1) bzw. am ersten Tragarm (TA1) befestigt sind.

13. Manipulatorsystem nach einem der Ansprüche 2, 3, 6, 7, 8 oder 12, dadurch gekennzeichnet, daß der Grundkörper (1) an seiner aus dem Montagespalt (sₘ) nach außen weisenden Schmalseite (1.0) mit einem Traggriff (2) versehen ist.

**Revendications**

1. Système de manipulateur pour la commande de déplacements, l'alimentation et l'interrogation des signaux d'un endoscope spécial (T), qui sert à examiner la structure de surfaces dans des fentes étroites d'inspection (a₀) de composants dans le domaine de la construction des machines et des appareils, notamment pour le contrôle optique de fissures, caractérisé par le fait

—qu'un endoscope spécial (T), qui possède une sonde en forme d'épée (SFS) équipée de systèmes optiques (BL, BB) de retransmission et d'éclairement d'images, est maintenu par un corps récepteur (EA) et ce corps récepteur de l'endoscope est monté sur un bras (TA3) de support du manipulateur, qui est déplaçable, à l'aide d'un mécanisme de déplacement à coordonnées du manipulateur (M), au moins dans une direction d'introduction z, dans une direction x de la largeur de la fente ou parallèlement à l'axe de l'arbre et dans la direction y perpendiculairement aux coordonnées z et x,

—que le corps récepteur (EA) est relié au bras (TA3) de support du manipulateur au moyen d'un organe intermédiaire (ZG), qui sert à réaliser un positionnement précis, par déviation, de la sonde en forme d'épée dans la fente d'inspection et permet une déviation linéaire de la sonde en forme d'épée (SFS), d'une manière adaptée à la limite de la fente, sur une faible course en millimètres (± ... x) dans la direction de coordonnée x et une déviation oscillatoire de la sonde autour d'un axe d'oscillation ($y_p$), dirigé dans la direction y située dans le plan (y—z) de la fente, sur une petite plage angulaire allant de quelques minutes d'arc jusqu'à quelques degrés.

2. Système de manipulateur suivant la revendication 1, caractérisé par le fait que pour son serrage dans la fente annulaire ($s_m$) entre deux têtes de roues (rs11, rs12), axialement voisines l'une de l'autre, du rotor à disques (L) d'une turbine à vapeur, le manipulateur (M) possède un corps de base plat (1) comportant, transversalement par rapport à son étendue longitudinale tangentielle, des corps de serrage agissant axialement notamment des vérins hydrauliques de serrage (Hy, Hy1, Hy2, Hy3).

3. Système de manipulateur suivant la revendication 2, caractérisé par le fait que sur le corps de base (1) est prévu un dispositif (SW1) d'entraînement dans la direction y, qui comporte un premier bras de support (TA1), qui s'étend dans la direction z, c'est-à-dire radialement vers l'intérieur, et est déplaçable dans la direction y, c'est-à-dire transversalement par rapport à l'axe longitudinal de la machine et notamment horizontalement, sur le corps de base (1), et

—que sur le premier bras de support (TA1) est fixé un second dispositif (SW2) d'entraînement suivant la direction z, qui est relié, selon une liaison motrice, à un second bras de support (TA2), qui est déplaçable dans la direction z et est monté sur le premier bras de support (TA1), s'étend essentiellement dans la direction y et comporte un dispositif (PA) d'entraînement suivant la direction x et à l'aide duquel un troisième bras de support (TA3) du manipulateur (M) est déplaçable dans la direction ±x, et

—que le troisième bras de support (TA3) est le bras de support du manipulateur, auquel est relié l'organe intermédiare (ZG).

4. Système de manipulateur suivant la revendication 1, caractérisé par le fait que la sonde en forme d'épée (SFS) de l'endoscope (E) est protégée, sur ses deux petits côtés, par des bras de guidage respectifs (h1), les deux bras de guidage convergeant en direction de la pointe de la sonde en forme d'épée (SFS), que ces bras de guidage (h1) servent de dispositif pour protéger la sonde en forme d'épée (SFS) lors de son introduction et de sa sortie, et sont en outre pourvus de canaux internes (a, b, c, d) et d'ouvertures de buses (62, 63), à l'aide desquels, un liquide de nettoyage, un liquide pénétrant et une poudre pour le contrôle des fissures ainsi que de l'air chaud peuvent être envoyés à l'emplacement d'inspection et une aspiration du liquide de nettoyage et du liquide pénétrant en excès peut être réalisée.

5. Système de manipulateur suivant la revendication 4, caractérisé par le fait que les bras de guidage sont montés de manière à être déplaçables dans la direction z (z11) par rapport à la sonde en forme d'épée, au moyen d'un curseur (650) monté sur le corps récepteur en étant guidé dans la direction z, et au moyen d'un dispositif d'entraînement secondaire (SW3) fixé sur le corps récepteur (EA).

6. Système de manipulateur suivant la revendication 3, caractérisé par le fait que le dispositif d'entraînement dans la direction x comprend une double articulation à genouillère, comprenant une liaison articulée à trois pattes comprenant une patte médiane d'entraînement (pa1), qui est articulée sur le second bras de support (TA2) ou sur sa patte (pa2) de manière à pouvoir pivoter autour d'un axe d'articulation dirigé suivant z (zz1) et sur laquelle le troisième bras de support (TA3) ou sa patte (pa3) est articulée de manière à pouvoir pivoter autour d'un second axe d'articulation suivant z (zz2), et

caractérisé par une liaison mécanique telle entre les trois pattes (pa2—pa1—pa3) que l'angle de pivotement (β') de la patte médiane d'entraînement (pa1) par rapport au second bras de support (TA2) est égale respectivement à l'angle de pivotement (β) de la patte médiane d'entraînement (pa1) par rapport au troisième bras de support (TA3).

7. Système de manipulateur suivant la revendication 6, caractérisé par le fait que les premier et second bras de support (TA2, TA3) ou les seconde et troisième pattes d'entraînement (pa2, pa3) comportent, sur le premier ou le second axe d'articulation suivant z (zz1) ou (zz2), respectivement un second pignon (zr2) et un troisième pignon (zr3), qui sont solidaires de ces bras ou pattes et possèdent le même diamètre et le même nombre de dents, et que la patte médiane d'entraînement (pa1) engrène, par un premier pignon (zr1) aussi bien avec le second pignon (zr2) qu'avec le troisième pignon (zr3), en constituant ainsi un engrenage planétaire (PA), dans lequel la roue planétaire est formée par le second pignon (zr2), le premier satellite est formé par le premier pignon (zr1) et le second satellite est formé par le troisième pignon (zr3), et que l'arbre d'entraînement d'un troisième moteur d'entraînement (AM3) est relié, d'une manière bloquée en rotation, à la patte médiane d'entraînement (pa1), de telle sorte que son axe coïncide avec le premier axe d'articulation dans la direction z (zz1).

8. Système de manipulateur suivant la revendication 6 ou 7, caractérisé par des butées (30) prévues sur les deux extrémités articulées de la patte médiane d'entraînement (pa1) pour limiter l'angle de pivotement (β) et par conséquent le trajet de déplacement (±x) pour le troisième bras de support (TA3).

9. Système de manipulateur suivant la revendication 1, caractérisé par le fait que l'organe intermédiaire flexible comporte un mécanisme linéaire à roue libre (FL), dont le boîtier constitue le troisième bras de support (TA3) du manipulateur (M) ou est relié rigidement à ce bras,

—que dans le carter du mécanisme linéaire à roue libre (FG), un bras de roue libre (37), monté sur des rouleaux, est déplaçable dans les limites de la faible course (±x),

—qu'un coussinet d'articulation (50) est disposé sur l'extrémité libre du bras de roue libre (37),

—qu'un tourillon (ea3) du corps récepteur (EA) logeant l'endoscope est monté dans le coussinet d'articulation (50) du bras de roue libre (37), de manière à pouvoir pivoter autour d'un axe d'oscillation ($y_p$), et

—que, pour limiter l'angle de rotation du déplacement oscillatoire, un élément de ressort (55) s'applique d'une part contre le corps récepteur (EA) et d'autre part sur le bras de roue libre (37).

10. Système de manipulateur suivant la revendication 9, caractérisé par le fait que l'élément de ressort (55) est un ressort en forme de lame, que, à l'état détendu dans la direction z, définit la position zéro de la course du mouvement d'oscillation.

11. Système de manipulateur suivant la revendication 9, caractérisé par le fait que des roulements axiaux à billes (51) sont insérés entre le tourillon (ea3) du corps récepteur (RE) et le coussinet d'articulation (50) du bras de roue libre (37).

12. Système de manipulateur suivant l'une des revendications 3, 6, 7 ou 8, caractérisé par le fait que le dispositif (SW1) d'entraînement suivant y pour le premier bras de support (TA1) et le dispositif (SW2) d'entraînement dans la direction z pour le second bras de support (TA2) possèdent respectivement une broche filetée à billes et un écrou mobile (KB1 ou KB2) utilisé comme manchon de guidage des billes et monté avec blocage en rotation tout en pouvant se déplacer axialement sur la broche, que les écrous mobiles (KB1, KB2) sont fixés respectivement sur leur premier bras de support (TA1) ou second bras de support (TA2) et que les bras de support sont guidés respectivement dans leur direction de déplacement (y) ou (z) respectivement dans des guides rectilignes (G1) ou (G2), fixés sur le corps de base (1) ou sur le premier bras de support (TA1), les moteurs d'entraînement (AM1 ou AM2), accouplés aux broches (KS1 ou KS2) associées au dispositif d'entraînement suivant y ou suivant z, étant fixés sur le corps de base (1) ou sur le premier bras de support (TA1).

13. Système de manipulateur suivant l'une des revendications 2, 3, 6, 7, 8 ou 12, caractérisé par le fait que le corps de base (1) comporte une poignée (2) sur son petit côté (1.0) tourné vers l'extérieur hors de la fente de montage ($s_m$).

**Claims**

1. Manipulator system for motional control of, providing for and signal interrogation of a specially made endoscope (E), which serves to examine the surface structure in narrow inspection gaps ($a_0$) of component parts of mechanical and apparatus engineering, more particularly for optical investigation of cracks, characterised in that the specially made endoscope (E), which has a sword-shaped probe (SFS) with image-conducting and image-illuminating optical systems (BL, BB), is held by an endoscope receiving body (EA) and the endoscope receiving body is mounted on a manipulator supporting arm (TA3) which may be moved with a coordinate travelling mechanism of the manipulator (M) at least in the direction of insertion z, in the direction x of the gap width or parallel to the shaft axis and also perpendicular to the coordinates z and x in the direction y, and in that the receiving body (EA) is connected with the manipulator supporting arm (TA3) by way of an intermediate member (ZG) which serves to position the sword-shaped probe in the inspection gap in a flexible and precise manner and which permits a linear deflection of the sword-shaped probe (SFS) conforming to the gap limit in the millimetre small range ($\pm\Delta x$) of the coordinate direction x and a pendulum-type deflection of the probe about an axis of swing ($y_p$), directed in the y-direction of the gap plane (y—z), in the small angular range of arc minutes up to a few degrees.

2. Manipulator system according to claim 1, characterised in that the manipulator (M) has a flat main body (1), which is provided, crosswise in relation to its tangential longitudinal extension, with clamping bodies, which act axially, more particularly hydraulic clamping cylinders (Hy, Hy1, Hy2, Hy3), for the purpose of bracing in the annular gap ($s_m$) between two axially adjacent wheel heads (rs11, rs12) of the disk rotor (L) of a steam turbine.

3. Manipulator system according to claim 2, characterised in that there is provided on the main body (1) a y-driving device (SW1) which comprises a first supporting arm (TA1), extending in the z-direction, that is, radially inwards, and which may be moved in the y-direction, that is, crosswise in relation to the longitudinal axis of the machine and more particularly horizontally, on the main body (1), and in that there is secured to the first supporting arm (TA1) a second, z-driving device (SW2), which is connected in terms of drive with a second supporting arm (TA2), which may be moved in the z-direction, is mounted on the first supporting arm (TA1), extends substantially in the y-direction and is provided with an x-driving device (PA) by means of which a third supporting arm (TA3) of the manipulator (M) may be adjusted in the direction ±x, and in that the third supporting arm (TA3) is the manipulator supporting arm with which the intermediate member (ZG) is connected.

4. Manipulator system according to claim 1, characterised in that the sword-shaped probe (SFS) of the endoscope (E) is screened on its two narrow sides by, in each case, a guide sword (h1), in which case the two guide swords taper converging towards the point of the sword-shaped probe (SFS), in that these guide swords (h1) serve as a device for protecting the sword-shaped probe (SFS) when inserting and extracting and are in addition provided with internal channels (a, b, c, d) and nozzle openings (62, 63), via which cleansing fluid, penetrating fluid and crack-investigating powder and also hot air may be supplied to the inspection place and excess cleansing and penetrating fluid may be removed by suction.

5. Manipulator system according to claim 4, characterised in that the guide swords are mounted so that they may be moved relative to the sword-shaped probe in the z-direction (z11) with a sliding carriage (650), which is mounted on the receiving body and directed in the z-direction, and by means of a subsidiary driving device (SW3) which is secured to the receiving body (EA).

6. Manipulator system according to claim 3, characterised in that the x-driving device comprises a double-bend joint, consisting of a three shackle joint connection having a central driving shackle (pa1) which is hinged on the second supporting arm (TA2) or its shackle (pa2) such that it may be pivoted about a first z-joint axis (zz1) and on which central shackle the third supporting arm (TA3) or its shackle (pa3) is hinged such that it may be pivoted about a second z-joint axis (zz2), and further characterised by a geared connection between the three shackles (pa2—pa1—pa3) such that the angle of swing ($\beta'$) of the central driving shackle (pa1) in relation to the second supporting arm (TA2) in each case is equal to the angle of swing ($\beta$) of the central driving shackle (pa1) in relation to the third supporting arm (TA3).

7. Manipulator system according to claim 6, characterised in that the second and third supporting arm (TA2, TA3) or the second and third driving shackle (pa2, pa3) in the first or second z-joint axis (zz1) or (zz2) have, fixedly connected to them, respectively a second toothed wheel (zr2) and a third toothed wheel (zr3) with equal diameters and with equal numbers of teeth, and in that the central driving shackle (pa1) mates by means of a first toothed wheel (zr1) both into the second (zr2) and the third toothed wheel (zr3) so that a planetary gear unit (PA) is formed with the second toothed wheel (zr2) as sun wheel, the first toothed wheel (zr1) as first planet wheel and the third toothed wheel (zr3) as second planet wheel, and in that the driving shaft of a third driving motor (AM3) is connected with the central driving shackle (pa1) equiaxial in relation to the first z-joint axis (zz1) and in a manner secure with respect to rotation.

8. Manipulator system according to claim 6 or 7, characterised by stops (30) on two joints ends of the central driving shackle (pa1) for limiting the angle of swing ($\beta$) and thereby the path of travel in the direction ($\pm$x) for the third supporting arm (TA3).

9. Manipulator system according to claim 1, characterised in that the flexible intermediate member has a free-running linear gear-unit (FL) whose housing is identical with the third supporting arm (TA3) of the manipulator (M) or is fixedly connected with the latter, in that a roller-mounted free-running arm (37) may be moved within the small range ($\pm$x) in the housing of the free-running linear gear-unit (FG), in that a joint lug (50) is arranged at the free end of the free-running arm (37), in that the endoscope receiving body (EA) is pivoted with a joint journal (ea3) about its axis of swing ($y_p$) in the joint lug (50) of the free-running arm (37) and in that for the purposes of limiting the swing angle of the pendulum-type movement, a spring element (55) acts, on the one hand, on the receiving body (EA) and, on the other hand, on the free-running arm (37).

10. Manipulator system according to claim 9, characterised in that the spring element (55) is a leaf spring which defines the neutral position of the amplitude pendulum swing in the relaxed state and when orientated in the z-direction.

11. Manipulator system according to claim 9, characterised in that axial ball bearings (51) are inserted between the joint journal (ea3) of the receiving body (EA) and the joint lug (50) of the free-running arm (37).

12. Manipulator system according to one of the claims 3, 6, 7 or 8, characterised in that the y-drive (SW1) for the first suporting arm (TA1) and the z-drive (SW2) for the second supporting arm (TA2) in each case have a ball-screw spindle (KS1 or KS2) and a moving nut (KB1 or KB2) which serves as a ball-guide bush and which is mounted on the spindle in a manner secure against rotation, so that it may be moved axially, in that the moving nuts (KB1, KB2) are secured in each case to their first (TA1) or second supporting arm (TA2) and the supporting arms are guided in each case on guides (G1) or G2), secured to the main body (1) or to the first supporting arm (TA1), in their travel direction (y) or (z), the driving motors (AM1 or AM2), which are coupled with the spindles (KS1 or KS2) pertaining to the y- or z-drive, being secured to the main body (1) or to the first supporting arm (TA1).

13. Manipulator system according to one of the claims 2, 3, 6, 7, 8 or 12, characterised in that the main body (1) is provided with a carrying handle (2) on its narrow side (1.0) which points outwards out of the mounting gap ($s_m$).

EP 0 157 304 B1

b$_f$

b$_0$

rs11  rs21

S$_m$

ZR

E

RS1  RS2

a0

L  W

sb  vs  P0

**FIG 2**

T1

T2

E

M

SFS

h1  h1

VS

C

D

St

B

V

TB

H

**FIG 1**

FIG 3

| FIG 3A | FIG 3C |
|--------|--------|
| FIG 3B |        |

FIG 3A

EP 0 157 304 B1

FIG 3B

EP 0 157 304 B1

FIG 3C

FIG 4

FIG 5

FIG 6

FIG 7

FIG 8

FIG 9

FIG 10

FIG 11

$$|x_1| = l_1 \cdot \sin\beta_1$$
$$|x_2| = l_1 \cdot \sin\beta_2$$

FIG 12